(19) **Europäisches Patentamt / European Patent Office / Office européen des brevets**

(11) **EP 4 778 981 A1**

(12) **EUROPEAN PATENT APPLICATION**
published in accordance with Art. 153(4) EPC

(43) Date of publication:
**22.07.2026 Bulletin 2026/30**

(21) Application number: **24864372.8**

(22) Date of filing: **14.08.2024**

(51) International Patent Classification (IPC):
*C08L 97/02* (2006.01)  *H04R 9/06* (2006.01)
*D06M 101/04* (2006.01)  *D06M 101/32* (2006.01)
*D06M 101/20* (2006.01)

(52) Cooperative Patent Classification (CPC):
**C08L 97/02; H04R 9/06; D06M 2101/04;**
D06M 2101/20; D06M 2101/32

(86) International application number:
**PCT/CN2024/112081**

(87) International publication number:
**WO 2025/055649 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 15.09.2023  CN 202311194810
15.09.2023  CN 202311194809
15.09.2023  CN 202311194808
15.09.2023  CN 202311194806
15.09.2023  CN 202311194805

(71) Applicant: **SSI New Material (Zhenjiang) Co., Ltd.**
**Zhenjiang, Jiangsu 212006 (CN)**

(72) Inventors:
• **GUO, Mingbo**
**Zhenjiang, Jiangsu 212006 (CN)**
• **ZHANG, Lei**
**Zhenjiang, Jiangsu 212006 (CN)**
• **MA, Yuanhong**
**Zhenjiang, Jiangsu 212006 (CN)**

(74) Representative: **Isern Patentes y Marcas S.L.**
**Avda. Diagonal, 463 Bis, 2°**
**08036 Barcelona (ES)**

(54) **ACOUSTICALLY REINFORCING COMPOSITE MATERIAL AND FABRICATION METHOD THEREFOR, LOUDSPEAKER, AND ELECTRONIC DEVICE**

(57)    An acoustically reinforcing composite material and a fabrication method therefor, a loudspeaker, and an electronic device, wherein the acoustically reinforcing composite material is formed by interweaving a fibrous material, and has a three-dimensional network structure inside, a porous powder material being attached to the surface of the fibrous material by means of a precipitation promoter. The acoustically reinforcing composite material has efficient acoustic performance, which, in terms of the porous powder material having an acoustically reinforcing function per unit mass, is superior to that of acoustically reinforcing particles commonly used in the market. The acoustically reinforcing composite material further has stable acoustic performance; and after the acoustically reinforcing composite material is stored at a high temperature and a high humidity according to the technical content recited in section 7.8.4 in the group standard Porous Sound-Absorbing Particles for Micro-speakers (standard number: T/CECA 78-2022), there is no loss in terms of the acoustic performance thereof.

FIG. 7

**Description**

CROSS-REFERENCE TO RELATED APPLICATIONS

The present application claims the priority rights of the following five Chinese patent applications filed with the State Intellectual Property Office: Application No. 202311194810.0, filed on September 15, 2023 and entitled "ACOUSTIC REINFORCING COMPOSITE MATERIAL AND FABRICATION METHOD THEREFOR, LOUDSPEAKER, AND ELECTRONIC DEVICE"; Application No. 202311194809.8, filed on September 15, 2023 and entitled "ACOUSTIC REINFORCING MATERIAL AND FABRICATION METHOD THEREFOR, LOUDSPEAKER, AND ELECTRONIC DEVICE"; Application No. 202311194808.3, filed on September 15, 2023 and entitled "ACOUSTICAL MATERIAL AND FABRICATION METHOD THEREFOR, LOUDSPEAKER, AND ELECTRONIC DEVICE"; Application No. 202311194806.4, filed on September 15, 2023 and entitled "SOUND-ABSORBING MATERIAL AND FABRICATION METHOD THEREFOR, LOUDSPEAKER, AND ELECTRONIC DEVICE"; and Application No. 202311194805.X, filed on September 15, 2023 and entitled "ACOUSTICAL COMPOSITE MATERIAL AND FABRICATION METHOD THEREFOR, LOUDSPEAKER, AND ELECTRONIC DEVICE", the entire contents of which are incorporated herein by reference.

FIELD OF TECHNOLOGY

The present disclosure relates to an acoustic reinforcing composite material, a fabrication method therefor, a loudspeaker, and an electronic device, pertaining to the field of materials, and particularly, the field of electronic acoustic materials.

BACKGROUND OF ART

Electronic products such as mobile phones, tablets, and laptops are becoming increasingly thin and lightweight. Therefore, the resonant cavities of the loudspeaker system component are becoming smaller and smaller. It is widely known that smaller loudspeaker may lead to an increase in resonant frequency and a decrease in low-frequency sound pressure sensitivity. On the contrary, the requirements of consumers for the audio quality of electronic products such as mobile phones, tablets, and laptops are increasing. To resolve the contradiction between these two aspects, acoustic reinforcing materials have emerged.

A conventional method for improving the audio quality of loudspeakers with small cavities is to prepare powdery porous materials capable of efficiently adsorbing and desorbing air molecules into sound-absorbing particles with an average particle size of 200-800 $\mu$m by molding technology, and to fill the particles into the loudspeaker cavity. However, this method has certain limitations. For example, existing technologies typically fill loudspeaker cavities with sound-absorbing particles using a canning method, but this process is quite challenging. Especially the resonant cavities of some micro-speakers have an extremely small space, with a height in the range of several hundred micrometers. Quantitative filling of sound-absorbing particles into such a narrow resonant cavity is nearly impossible. However, the narrow resonant cavities most significantly impact low-frequency performance and are precisely the structures most in need of acoustic material filling. Furthermore, during the operation of the loudspeaker, conventional sound-absorbing particles vibrate at high frequencies within the cavity and collide with the inner wall of the cavity, resulting in the cracking and pulverization of the sound-absorbing particles, which damages the loudspeaker unit. Additionally, current filling techniques only allow sound-absorbing particles to occupy approximately 80% of the volume of the rear cavity in loudspeaker module, failing to fully utilize the available rear cavity space.

Therefore, providing a novel acoustic reinforcing composite material, a fabrication method therefor, a loudspeaker, and an electronic device has become an urgent technical problem to be solved in the art.

SUMMARY OF THE INVENTION

To address the drawbacks and deficiencies as described above, one object of the present disclosure is to provide an acoustic reinforcing composite material.

Another object of the present disclosure is to provide a method for producing said acoustic reinforcing composite material.

A further object of the present disclosure is to provide a loudspeaker, the rear cavity of which is provided with said acoustic reinforcing composite material.

Yet another object of the present disclosure is to provide an electronic device comprising a loudspeaker, in which the rear cavity of the loudspeaker is provided with said acoustic reinforcing composite material.

To achieve the above objects, in one aspect, the present disclosure provides an acoustic reinforcing composite material, wherein the acoustic reinforcing composite material is formed by interweaving a fibrous material and has a three-dimensional network structure inside, and wherein a powdery porous material is attached to the surface of the fibrous material by means of a precipitation aid.

As a specific embodiment of said acoustic reinforcing composite material of the present disclosure, wherein based on 100% of the total weight of the acoustic reinforcing composite material, the dry mass of the fibrous material is 19.50-85.95%, the dry mass of the powdery porous material is 14.0-80.0%, preferably 50.0-70.0%, and the dry mass of the precipitation aid is 0.05-0.5%.

As a specific embodiment of said acoustic reinforcing composite material of the present disclosure, wherein the diameter or width of the fibrous material is in the range of 3-70 μm, and the aspect ratio thereof is in the range of 8-500.

As a specific embodiment of said acoustic reinforcing composite material of the present disclosure, wherein the diameter or width of the fibrous material is in the range of 8-70 μm.

As a specific embodiment of said acoustic reinforcing composite material of the present disclosure, wherein the fibrous material comprises organic fibers, and the like.

As a specific embodiment of said acoustic reinforcing composite material of the present disclosure, wherein the organic fibers comprise hydrophilic natural fibers, and/or chemically synthesized fibers, and the like.

As a specific embodiment of said acoustic reinforcing composite material of the present disclosure, wherein the organic fibers comprise hydrophilic natural fibers, chemically synthesized fibers, and the like, and the dry mass ratio of the hydrophilic natural fibers to the chemically synthesized fibers is 100-80:0-20, preferably 100-95:0-5. When the organic fibers comprise both hydrophilic natural fibers and chemically synthesized fibers, the dry mass ratio of the hydrophilic natural fibers to the chemically synthesized fibers is 80-98:2-20, preferably 95-98:2-5.

As a specific embodiment of said acoustic reinforcing composite material of the present disclosure, wherein the chemically synthesized fibers comprise chemically synthesized fibers without hydrophilic modification, and/or hydrophilically modified chemically synthesized fibers obtained by subjecting chemically synthesized fibers without hydrophilic modification to hydrophilic modification, and the like, preferably wherein the chemically synthesized fibers comprise hydrophilically modified chemically synthesized fibers;

wherein the chemically synthesized fibers without hydrophilic modification comprises one or more of polypropylene fibers, polyamide fibers, polyethylene fibers, polyester fibers, polylactic acid fibers, polyetheretherketone fibers, polyphenylene sulfide fibers, and polyacrylonitrile fibers;

the hydrophilically modified chemically synthesized fibers comprise one or more of hydrophilically modified polypropylene fibers, hydrophilically modified polyamide fibers, hydrophilically modified polyethylene fibers, hydrophilically modified polyester fibers, hydrophilically modified polylactic acid fibers, hydrophilically modified polyetheretherketone fibers, hydrophilically modified polyphenylene sulfide fibers, and hydrophilically modified polyacrylonitrile fibers.

As a specific embodiment of said acoustic reinforcing composite material of the present disclosure, wherein the cross-sectional shape of the chemically synthesized fibers comprises a circular shape, a flat shape, a special shape, or the like, wherein the special shape comprises a cross-shaped structure, a core-sheath structure, a triangular structure, a clover structure, a "王"-shaped structure, a Y-shaped structure, a hollow structure, or the like.

As a specific embodiment of said acoustic reinforcing composite material of the present disclosure, wherein the hydrophilic natural fibers comprise one or more of plant fibers, regenerated cellulose fibers, bacterial fibers, and the like, and the dry mass ratio of the plant fibers, regenerated cellulose fibers and bacterial fibers is (100-60):(0-30):(0-10), preferably (100-85):(0-10):(0-5). When the hydrophilic natural fibers comprise plant fibers, regenerated cellulose fibers and bacterial fibers, the dry mass ratio of the plant fibers, regenerated cellulose fibers and bacterial fibers is (60-98):(1.5-30):(0.5-10), preferably (85-98):(1.5-10):(0.5-5).

As a specific embodiment of said acoustic reinforcing composite material of the present disclosure, wherein when the fibrous material is composed of plant fibers and hydrophilically modified chemically synthesized fibers, the dry mass ratio between these two is (98-70):(2-30), preferably (95-80):(5-20).

As a specific embodiment of said acoustic reinforcing composite material of the present disclosure, wherein the plant fibers comprise fine plant fibers and/or thick plant fibers, wherein the diameter or width of the fine plant fibers is in the range of 8 μm or more and less than 30 μm, and the diameter or width of the thick plant fibers is in the range of 30-70 μm;

the dry mass ratio of the thick plant fibers to the fine plant fibers is (100-0):(0-100), preferably (100-30):(0-70). When the plant fibers comprise both fine plant fibers and thick plant fibers, the dry mass ratio of the thick plant fibers to the fine plant fibers is (30-80):(20-70).

As a specific embodiment of said acoustic reinforcing composite material of the present disclosure, wherein the aspect ratio of the plant fibers is 8-150.

As a specific embodiment of said acoustic reinforcing composite material of the present disclosure, wherein the plant fibers are a fibrous material produced from natural plants as raw materials, and the natural plants comprise one or more of softwood, hardwood, bast fiber crops, bamboo, rice straw, bagasse, reed, cotton, and the like.

As a specific embodiment of said acoustic reinforcing composite material of the present disclosure, wherein the regenerated cellulose fibers comprise one or more of viscose fibers, Modal fibers, Lyocell fibers, acetate fibers, cuprammonium fibers, Tencel fibers, and the like.

As a specific embodiment of said acoustic reinforcing composite material of the present disclosure, wherein the bacterial fibers comprise cellulose fibers synthesized by microorganisms under certain conditions using nutrients required for bacterial growth and reproduction as raw materials, wherein the microorganisms comprise *Acetobacterium, Agrobacterium, Rhizobium, Sarcina,* or the like.

As a specific embodiment of said acoustic reinforcing composite material of the present disclosure, wherein the fibrous material comprises one or more of inorganic fibers, plant fibers, composite chemical fibers, and the like.

As a specific embodiment of said acoustic reinforcing composite material of the present disclosure, wherein the diameter or width of the inorganic fibers is in the range of 3-45 $\mu$m, and the aspect ratio thereof is 10-500.

As a specific embodiment of said acoustic reinforcing composite material of the present disclosure, wherein the inorganic fibers comprise one or more of basalt fibers, glass fibers, quartz fibers, asbestos fibers, volcanic fibers, metal fibers, alumina fibers, carbon fibers, and the like.

As a specific embodiment of said acoustic reinforcing composite material of the present disclosure, wherein the diameter or width of the plant fibers is in the range of 8-70 $\mu$m, and the aspect ratio thereof is in the range of 8-150.

As a specific embodiment of said acoustic reinforcing composite material of the present disclosure, wherein the moisture absorption rate of the plant fibers is 16.0-31.5%, preferably 20.0-31.5%.

As a specific embodiment of said acoustic reinforcing composite material of the present disclosure, wherein the plant fibers are a fibrous material produced from natural plants as raw materials, and the natural plants comprise one or more of softwood, hardwood, bast fiber crops, bamboo, rice straw, bagasse, reeds, cotton, and the like.

As a specific embodiment of said acoustic reinforcing composite material of the present disclosure, wherein the diameter or width of the composite chemical fibers is in the range of 10-70 $\mu$m, and the aspect ratio thereof is in the range of 10-200.

As a specific embodiment of said acoustic reinforcing composite material of the present disclosure, wherein the composite chemical fibers comprise one or more of composite chemical fibers with a core-sheath structure, a parallel structure, a sea-island structure, or the like.

As a specific embodiment of said acoustic reinforcing composite material of the present disclosure, wherein the composite chemical fibers with a parallel structure comprise chemical fibers having a melting point not higher than 140°C, chemical fibers having a melting point not lower than 150°C, and the like.

As a specific embodiment of said acoustic reinforcing composite material of the present disclosure, wherein the chemical fibers having a melting point not higher than 140°C comprise polyethylene fibers and/or modified polyester fibers, and the like, and the chemical fibers having a melting point not lower than 150°C comprises ordinary polyester fibers and/or polypropylene fibers, and the like.

As a specific embodiment of said acoustic reinforcing composite material of the present disclosure, wherein the composite chemical fiber with a sea-island structure comprises a matrix and a dispersed phase, the material of the matrix comprises chemical fibers having a melting point not higher than 140°C, and the like, and the material of the dispersed phase comprises chemical fibers having a melting point not lower than 150°C, and the like.

As a specific embodiment of said acoustic reinforcing composite material of the present disclosure, wherein the material of the matrix comprises polyethylene fibers and/or modified polyester fibers, and the like, and the material of the dispersed phase comprises ordinary polyester fibers and/or polypropylene fibers, and the like.

As a specific embodiment of said acoustic reinforcing composite material of the present disclosure, wherein the composite chemical fibers with a core-sheath structure comprises a core layer and a sheath layer covering the core layer, the material of the sheath layer comprises chemical fibers having a melting point not higher than 140°C, and the like, and the material of the core layer comprises chemical fibers having a melting point not lower than 150°C, and the like.

As a specific embodiment of said acoustic reinforcing composite material of the present disclosure, wherein the core layer comprises ordinary polyester fibers and/or polypropylene fibers, and the like, and the sheath layer comprises polyethylene fibers and/or modified polyester fibers, and the like.

As a specific embodiment of said acoustic reinforcing composite material of the present disclosure, wherein the dry mass ratio of the plant fibers to the composite chemical fibers is (98-60):(2-40).

As a specific embodiment of said acoustic reinforcing composite material of the present disclosure, wherein the powdery porous material comprises one or more of zeolite molecular sieve, activated silica, activated carbon, calcium carbonate with a porous surface, calcium silicate with a porous surface, alumina, hydrogels, aerogels, and the like.

As a specific embodiment of said acoustic reinforcing composite material of the present disclosure, wherein the zeolite molecular sieve has a particle size of 0.5-10 $\mu$m, and comprises micropores having a pore size of 0.3-0.7 nm and mesopores having a pore size of 10-30 nm.

As a specific embodiment of said acoustic reinforcing composite material of the present disclosure, wherein the zeolite molecular sieve comprises one or more of **MFI-**structured molecular sieve, FER-structured molecular sieve, CHA-structured molecular sieve, MEL-structured molecular sieve, TON-structured molecular sieve, MTT-structured molecular sieve, and the like.

As a specific embodiment of said acoustic reinforcing composite material of the present disclosure, wherein the precipitation aid comprises one or more of polyacrylamide, starch, polyethyleneimine, polyimide, guar gum, and the like.

As a specific embodiment of said acoustic reinforcing composite material of the present disclosure, wherein the GSM of the acoustic reinforcing composite material is in the range of 50-1200 g/m$^2$.

As a specific embodiment of said acoustic reinforcing composite material of the present disclosure, wherein the shape of the acoustic reinforcing composite material comprises a sheet shape, a block shape, an irregular shape, or the like.

In another aspect, the present disclosure also provides a method for producing said acoustic reinforcing composite material, comprising:

Step 1: dispersing the fibrous material, the powdery porous material, and the precipitation aid in water separately, to obtain a fibrous material dispersion, a powdery porous material dispersion, and a precipitation aid dispersion, respectively;

Step 2: adding the powdery porous material dispersion to the fibrous material dispersion and mixing uniformly, and then adding the precipitation aid dispersion and mixing uniformly to interweave the fibrous material while simultaneously precipitating the powdery porous material onto the surface of the fibrous material;

Step 3: filtering the mixed liquid obtained in Step 2 to obtain a precursor material;

Step 4: drying the precursor material to obtain the acoustic reinforcing composite material.

As a specific embodiment of said fabrication method of the present disclosure, wherein when the fibrous material comprises composite chemical fibers, said method further comprises:

Step 5: subjecting the acoustic reinforcing material to a high-temperature treatment at a temperature not lower than the melting point of the sheath layer contained in the composite chemical fibers, such that the sheath layer in the composite chemical fibers is melted while the core layer is not.

In another aspect, the present disclosure also provides a loudspeaker comprising one or more acoustic sensors and one or more housings, wherein the one or more acoustic sensors and the one or more housings are combined to form a rear cavity of the loudspeaker, and wherein the acoustic reinforcing composite material described above is provided in the rear cavity of the loudspeaker.

In yet another aspect, the present disclosure also provides an electronic device comprising a loudspeaker, wherein the acoustic reinforcing composite material described above is provided in the rear cavity of the loudspeaker.

As a specific embodiment of said electronic device, wherein the electronic device comprises a smart phone, a TWS earphone, a headphone, smart glasses, a smart watch, a VR device, an AR device, a tablet computer, a lightweight laptop, or the like.

To achieve the above objects, the present disclosure adopts the following technical solutions:

In the first aspect, the first solution of the present disclosure provides an acoustic reinforcing composite material, wherein the acoustic reinforcing composite material is formed by interweaving a fibrous material and has a three-dimensional network structure inside, and wherein a powdery porous material is attached to the surface of the fibrous material by means of a precipitation aid.

In the acoustic reinforcing composite material provided by the present disclosure, the powdery porous material is attached to the three-dimensional network structure and the surface of the acoustic reinforcing composite material.

In combination with the first solution, in an implementable embodiment, based on 100% of the total weight of the acoustic reinforcing composite material, the dry mass of the fibrous material is 19.50-85.95%, the dry mass of the powdery porous material is 14.0-80.0%, and the dry mass of the precipitation aid is 0.05-0.5%.

In the present disclosure, the smaller the diameter or width of the fibrous material, the smaller the aspect ratio, and the larger the specific surface area of the fibrous material for the same mass, which means that there is more surface area for interaction with the powdery porous material having an acoustic reinforcing properties. On the other hand, the larger the diameter or width of the fibrous material, the larger the aspect ratio, the more significant the interweaving effect between the fibrous materials and the more complex the three-dimensional network structure formed, resulting in a better physical strength of the obtained acoustic reinforcing composite material. However, if the diameter or width of the fibrous material is too large, the surface of the acoustic reinforcing composite material prepared thereby becomes rougher and uneven. Moreover, since the aspect ratio of the fibrous material is too large, it is difficult for the fibrous material to disperse in water, and the fibrous materials entangle with each other, making it difficult to separate them into individual fibers. Based on this, in combination with the first solution, in an implementable embodiment, the diameter or width of the fibrous material is in the range of 8-70 μm, and the aspect ratio thereof is in the range of 8-500, preferably 8-150. In the present disclosure, the "aspect ratio" refers to the ratio of length to diameter of the fibrous material. In some special fibrous materials, the "aspect ratio" may also be understood as the ratio of length to width.

In combination with the first solution, the present disclosure provides a second solution, in which the fibrous material comprises organic fibers.

In combination with the first and second solutions, in an implementable embodiment, the organic fibers comprise hydrophilic natural fibers, chemically synthesized fibers, and the like, and the dry mass ratio of the hydrophilic natural fibers to the chemically synthesized fibers is 100-80:0-20, preferably 100-95:0-5. The organic fibers are preferably hydrophilic natural fibers. When the organic fibers comprise both hydrophilic natural fibers and chemically synthesized fibers, the dry mass ratio of the hydrophilic natural fibers to the chemically synthesized fibers is 80-98:2-20, preferably 95-98:2-5.

In combination with the first and second solutions, in an implementable embodiment, the chemically synthesized fibers comprise chemically synthesized fibers without hydrophilic modification, and/or hydrophilically modified chemically synthesized fibers obtained by subjecting chemically synthesized fibers without hydrophilic modification to hydrophilic modification, and the like, preferably wherein the chemically synthesized fibers comprise hydrophilically modified chemically synthesized fibers;
wherein the chemically synthesized fibers without hydrophilic modification comprises one or more of polypropylene fibers, polyamide fibers, polyethylene fibers, polyester fibers, polylactic acid fibers, polyetheretherketone fibers, polyphenylene sulfide fibers, polyacrylonitrile fibers, and the like.

The hydrophilic modifying agent used in the present disclosure for the hydrophilic modification of the chemically synthesized fibers is not specifically required and may be reasonably selected based on actual operational needs. For example, in some embodiments of the present disclosure, the hydrophilic modifying agent may be maleic anhydride, and accordingly, the hydrophilically modified chemically synthesized fibers may be maleic anhydride-modified polypropylene fibers, maleic anhydride-modified polyester fibers, or the like.

The chemically synthesized fibers used in the present disclosure are characterized by having no significant interaction force between each other, such as hydrogen bonding and electrostatic attraction, and having a low density. The mechanical interweaving force between such fibrous materials is the main interaction force, which can create a three-dimensional space structure with high porosity, that is, a three-dimensional network structure, which may facilitate air circulation.

In combination with the first and second solutions, in an implementable embodiment, the cross-sectional shape of the chemically synthesized fibers comprises a circular shape, a flat shape, a special shape, or the like, wherein the special shape comprises a cross-shaped structure, a core-sheath structure, a triangular structure, a clover structure, a "王"-shaped structure, a Y-shaped structure, a hollow structure, or the like.

In combination with the first and second solutions, in an implementable embodiment, the hydrophilic natural fibers comprise one or more of plant fibers, regenerated cellulose fibers, bacterial fibers, and the like, and the dry mass ratio of the plant fibers, regenerated cellulose fibers and bacterial fibers is (100-60):(0-30):(0-10), preferably (100-85):(0-10):(0-5). When the hydrophilic natural fibers comprise plant fibers, regenerated cellulose fibers and bacterial fibers, the dry mass ratio of the plant fibers, regenerated cellulose fibers and bacterial fibers is (60-98):(1.5-30):(0.5-10), preferably (85-98):(1.5-10):(0.5-5).

The hydrophilic natural fibers used in the present disclosure comprise plant fibers, regenerated cellulose fibers, and bacterial fibers, the chemical structures of which contains a large number of hydrophilic groups, such as hydroxyl groups, carboxyl groups, and the like. The acoustic reinforcing composite material made of hydrophilic natural fibers are provided in the rear cavity of the loudspeaker, and during practical use, water molecules in the air may be preferentially absorbed and fixed by the hydrophilic natural fibers, thereby reducing the performance degradation of the powdery porous material particles due to water molecules, and fully improving the service life of the acoustic reinforcing composite material inside the rear cavity.

In combination with the first and second solutions, in an implementable embodiment, depending on variations of diameter or width, the plant fibers can be divided into two categories, including fine plant fibers and/or thick plant fibers, wherein the diameter or width of the fine plant fibers is in the range of 8 $\mu$m or more and less than 30 $\mu$m, and the diameter or width of the thick plant fibers is in the range of 30-70 $\mu$m.

The dry mass ratio of the thick plant fibers to the fine plant fibers is (100-0):(0-100), preferably (100-30):(0-70). When the plant fibers comprise both fine plant fibers and thick plant fibers, the dry mass ratio of the thick plant fibers to the fine plant fibers is (30-80):(20-70).

In combination with the first and second solutions, in an implementable embodiment, the aspect ratio of the plant fibers is 8-150.

In combination with the first and second solutions, in an implementable embodiment, the plant fibers are a fibrous material produced from natural plants as raw materials, and the natural plants comprise one or more of softwood, hardwood, bast fiber crops, bamboo, rice straw, bagasse, reed, cotton, and the like.

The method for producing plant fibers from natural plants is a conventional method, which may be reasonably adjusted according to the characteristics of the natural plants and the performance of the target plant fibers. For example, in some embodiments of the present disclosure, the preparation method comprises: removing lignin and most of the hemicellulose from the natural plant, followed by bleaching treatment or without bleaching treatment, to obtain a fibrous material mainly composed of cellulose, that is, the plant fibers.

In the present disclosure, the regenerated cellulose fibers are fibrous materials obtained by further processing high-purity cellulose derived from natural plants. In combination with the first and second solutions, in an implementable embodiment, the regenerated cellulose fibers comprise one or more of viscose fibers, Modal fibers, Lyocell fibers, acetate fibers, cuprammonium fibers, Tencel fibers, and the like.

In the present disclosure, the bacterial fibers are fibrous materials derived from bacterial microorganisms, which is prepared by a biological method. In combination with the first and second solutions, in an implementable embodiment, the bacterial fibers comprise cellulose fibers synthesized by microorganisms under certain conditions using nutrients required for bacterial growth and reproduction as raw materials, wherein the microorganisms comprise *Acetobacterium, Agrobacterium, Rhizobium, Sarcina,* or the like.

In combination with the first and second solutions, in an implementable embodiment, a single type of organic fibers or a combination of multiple types of organic fibers may be selected as the fibrous material, and a combination of organic fibers with different diameters or widths and/or different aspect ratios may also be selected. Preferably, the fibrous material comprises a combination of two or more types of organic fibers with different diameters or widths and/or different aspect ratios.

The powdery porous material used in the present disclosure have acoustic enhancement properties and may be selected from powdery porous materials commonly used in the field for producing acoustic enhancement materials. In combination with the first and second solutions, in an implementable embodiment, the powdery porous material comprises one or more of zeolite molecular sieve, activated silica, activated carbon, calcium carbonate with a porous surface, calcium silicate with a porous surface, alumina, hydrogels, aerogels, and the like.

In combination with the first and second solutions, in an implementable embodiment, the zeolite molecular sieve has a particle size of 0.5-10 $\mu$m, and comprises micropores having a pore size of 0.3-0.7 nm and mesopores having a pore size of 10-30 nm.

In combination with the first and second solutions, in an implementable embodiment, the zeolite molecular sieve comprises one or more of MFI-structured molecular sieve, FER-structured molecular sieve, CHA-structured molecular sieve, MEL-structured molecular sieve, TON-structured molecular sieve, MTT-structured molecular sieve, and the like.

In combination with the first and second solutions, in an implementable embodiment, the precipitation aid comprises one or more of polyacrylamide, starch, polyethyleneimine, polyimide, guar gum, and the like.

In combination with the first and second solutions, in an implementable embodiment, the GSM of the acoustic reinforcing composite material is in the range of 50-1200 g/m$^2$.

In combination with the first and second solutions, in an implementable embodiment, the shape of the acoustic reinforcing composite material comprises a sheet shape, a block shape, an irregular shape, or the like. When applying the acoustic reinforcing composite material, those skilled in the art may reasonably select an acoustic reinforcing composite material with a suitable shape as desired. In addition, those skilled in the art may also obtain the acoustic reinforcing composite material having the target shape on the basis of the fabrication method provided by the present disclosure in combination with conventional means.

In combination with the first and second solutions, in an implementable embodiment, the acoustic reinforcing composite material is formed by interweaving hydrophilic fibers and has a three-dimensional network structure inside, and wherein a powdery porous material is attached to the surface of the hydrophilic fibers by means of a precipitation aid;

wherein the hydrophilic fibers comprise hydrophilic natural fibers and/or hydrophilically modified chemically synthesized fibers.

In the acoustic reinforcing composite material provided by the present disclosure, the powdery porous material is attached to the three-dimensional network structure and the surface of the acoustic reinforcing composite material.

In combination with the first and second solutions, in an implementable embodiment, based on 100% of the total weight of the acoustic reinforcing composite material, the dry mass of the hydrophilic fibers is 19.50-85.95%, the dry mass of the powdery porous material is 14.0-80.0%, and the dry mass of the precipitation aid is 0.05-0.5%.

In the present disclosure, the smaller the diameter or width of the hydrophilic fibers, the smaller the aspect ratio, and the larger the specific surface area of the hydrophilic fibers for the same mass, which means that there is more surface area for interaction with the powdery porous material having an acoustic reinforcing properties. On the other hand, the larger the diameter or width of the hydrophilic fibers, the larger the aspect ratio, the more significant the interweaving effect between the hydrophilic fibers and the more complex the three-dimensional network structure formed, resulting in a better physical strength of the obtained acoustic reinforcing composite material. However, if the diameter or width of the hydrophilic fibers is too large, the surface of the acoustic reinforcing composite material prepared thereby becomes rougher and uneven. Moreover, since the aspect ratio of the hydrophilic fibers is too large, it is difficult for the hydrophilic fibers to disperse in water, and the hydrophilic fibers entangle with each other, making it difficult to separate them into individual fibers. Based on this, in combination with the first solution, in an implementable embodiment, the diameter or width of the hydrophilic fibers is in the range of 8-70 $\mu$m, and the aspect ratio thereof is in the range of 8-500, preferably 8-150. In the present disclosure, the "aspect ratio" refers to the ratio of length to diameter of the hydrophilic fibers. In some special hydrophilic fibers, the "aspect ratio" may also be understood as the ratio of length to width.

In combination with the first and second solutions, in an implementable embodiment, the dry mass ratio of the hydrophilic natural fibers to the hydrophilically modified chemically synthesized fibers is 100-80:0-20, preferably 100-95:0-5. When the organic fibers comprise both hydrophilic natural fibers and chemically synthesized fibers, the dry mass ratio of the hydrophilic natural fibers to the chemically synthesized fibers is 80-98:2-20, preferably 95-98:2-5.

In combination with the first and second solutions, in an implementable embodiment, the hydrophilically modified chemically synthesized fibers comprise one or more of hydrophilically modified polypropylene fibers, hydrophilically modified polyamide fibers, hydrophilically modified polyethylene fibers, hydrophilically modified polyester fibers, hydrophilically modified polylactic acid fibers, hydrophilically modified polyetheretherketone fibers, hydrophilically modified polyphenylene sulfide fibers, hydrophilically modified polyacrylonitrile fibers, and the like.

The hydrophilic modifying agent used in the present disclosure for the hydrophilic modification of the chemically synthesized fibers is not specifically required and may be reasonably selected based on actual operational needs. For example, in some embodiments of the present disclosure, the hydrophilic modifying agent may be maleic anhydride, and accordingly, the hydrophilically modified chemically synthesized fibers may be maleic anhydride-modified polypropylene fibers, maleic anhydride-modified polyester fibers, or the like.

The hydrophilically modified chemically synthesized fibers used in the present disclosure are characterized by having no significant interaction force between each other, such as hydrogen bonding and electrostatic attraction, and having a low density. The mechanical interweaving force between such fibrous materials is the main interaction force, which can create a three-dimensional space structure with high porosity, that is, a three-dimensional network structure, which may facilitate air circulation.

In combination with the first and second solutions, in an implementable embodiment, the cross-sectional shape of the hydrophilically modified chemically synthesized fibers comprise a circular shape, a flat shape, a special shape, or the like, wherein the special shape comprises a cross-shaped structure, a core-sheath structure, a triangular structure, a clover structure, a "王"-shaped structure, a Y-shaped structure, a hollow structure, or the like.

In combination with the first and second solutions, in an implementable embodiment, the hydrophilic natural fibers comprise one or more of plant fibers, regenerated cellulose fibers, bacterial fibers, and the like, wherein the dry mass ratio of the plant fibers, regenerated cellulose fibers and bacterial fibers is (100-60):(0-30):(0-10), preferably (100-85):(0-10):(0-5). When the hydrophilic natural fibers comprise plant fibers, regenerated cellulose fibers and bacterial fibers, the dry mass ratio of the plant fibers, regenerated cellulose fibers and bacterial fibers is (60-98):(1.5-30):(0.5-10), preferably (85-98):(1.5-10):(0.5-5).

The hydrophilic natural fibers used in the present disclosure comprise plant fibers, regenerated cellulose fibers, and bacterial fibers, the chemical structures of which contains a large number of hydrophilic groups, such as hydroxyl groups, carboxyl groups, and the like. The acoustic reinforcing composite material made of hydrophilic natural fibers are provided in the rear cavity of the loudspeaker, and during practical use, water molecules in the air may be preferentially absorbed and fixed by the hydrophilic natural fibers, thereby reducing the performance degradation of the powdery porous material particles due to water molecules, and fully improving the service life of the acoustic reinforcing composite material inside the rear cavity.

In combination with the first and second solutions, in an implementable embodiment, depending on variations of diameter or width, the plant fibers can be divided into two categories, including fine plant fibers and/or thick plant fibers, wherein the diameter or width of the fine plant fibers is in the range of 8 $\mu$m or more and less than 30 $\mu$m, and the diameter or width of the thick plant fibers is in the range of 30-70 $\mu$m.

The dry mass ratio of the thick plant fibers to the fine plant fibers is (100-0):(0-100), preferably (100-30):(0-70). When the plant fibers comprise both fine plant fibers and thick plant fibers, the dry mass ratio of the thick plant fibers to the fine plant fibers is (30-80):(20-70).

In combination with the first and second solutions, in an implementable embodiment, the aspect ratio of the plant fibers is 8-150.

In combination with the first and second solutions, in an implementable embodiment, the plant fibers are a fibrous material produced from natural plants as raw materials, and the natural plants comprise one or more of softwood, hardwood, bast fiber crops, bamboo, rice straw, bagasse, reed, cotton, and the like.

The method for producing plant fibers from natural plants is a conventional method, which may be reasonably adjusted according to the characteristics of the natural plants and the performance of the target plant fibers. For example, in some embodiments of the present disclosure, the preparation method comprises: removing lignin and most of the hemicellulose from the natural plant, followed by bleaching treatment or without bleaching treatment, to obtain a fibrous material mainly composed of cellulose, that is, the plant fibers.

In the present disclosure, the regenerated cellulose fibers are fibrous materials obtained by further processing high-purity cellulose derived from natural plants. In combination with the first and second solutions, in an implementable embodiment, the regenerated cellulose fibers comprise one or more of viscose fibers, Modal fibers, Lyocell fibers, acetate fibers, cuprammonium fibers, Tencel fibers, and the like.

In the present disclosure, the bacterial fibers are fibrous materials derived from bacterial microorganisms, which is prepared by a biological method. In combination with the first and second solutions, in an implementable embodiment, the bacterial fibers comprise cellulose fibers synthesized by microorganisms under certain conditions using nutrients required for bacterial growth and reproduction as raw materials, wherein the microorganisms comprise *Acetobacterium, Agrobacterium, Rhizobium, Sarcina,* or the like.

In combination with the first and second solutions, in an implementable embodiment, the hydrophilic fibers may be selected from a single type of hydrophilic natural fibers and/or hydrophilically modified chemically synthesized fibers, and a combination of multiple types of fibers, or a combination of fibers with different diameters or widths and/or different aspect ratios, may also be selected. Preferably, the hydrophilic fibers comprise a combination of two or more types of fibers with different diameters or widths and/or different aspect ratios.

The powdery porous material used in the present disclosure have acoustic enhancement properties and may be selected from powdery porous materials commonly used in the field for producing acoustic enhancement materials. In combination with the first and second solutions, in an implementable embodiment, the powdery porous material comprises one or more of zeolite molecular sieve, activated silica, activated carbon, calcium carbonate with a porous surface, calcium silicate with a porous surface, alumina, hydrogels, aerogels, and the like.

In combination with the first and second solutions, in an implementable embodiment, the zeolite molecular sieve has a particle size of 0.5-10 $\mu$m, and comprises micropores having a pore size of 0.3-0.7 nm and mesopores having a pore size of 10-30 nm.

In combination with the first and second solutions, in an implementable embodiment, the zeolite molecular sieve comprises one or more of MFI-structured molecular sieve, FER-structured molecular sieve, CHA-structured molecular sieve, MEL-structured molecular sieve, TON-structured molecular sieve, MTT-structured molecular sieve, and the like.

In combination with the first and second solutions, in an implementable embodiment, the precipitation aid comprises one or more of polyacrylamide, starch, polyethyleneimine, polyimide, guar gum, and the like.

In combination with the first and second solutions, in an implementable embodiment, the GSM of the acoustic reinforcing composite material is in the range of 50-1200 g/m$^2$.

In combination with the first and second solutions, in an implementable embodiment, the shape of the acoustic reinforcing composite material comprises a sheet shape, a block shape, an irregular shape, or the like. When applying the acoustic reinforcing composite material, those skilled in the art may reasonably select an acoustic reinforcing composite material with a suitable shape as desired. In addition, those skilled in the art may also obtain the acoustic reinforcing composite material having the target shape on the basis of the fabrication method provided by the present disclosure in combination with conventional means.

In combination with the first and second solutions, in an implementable embodiment, the acoustic reinforcing composite material is formed by interweaving a fibrous material and has a three-dimensional network structure inside, and wherein a powdery porous material is attached to the surface of the fibrous material by means of a precipitation aid;

wherein the fibrous material comprises hydrophilically modified chemically synthesized fibers, or a combination of chemically synthesized fibers without hydrophilic modification and hydrophilically modified chemically synthesized fibers.

In the acoustic reinforcing composite material provided by the present disclosure, the powdery porous material is attached to the three-dimensional network structure and the surface of the acoustic reinforcing composite material.

In combination with the first and second solutions, in an implementable embodiment, based on 100% of the total weight of the acoustic reinforcing composite material, the dry mass of the hydrophilic fibers is 19.50-85.95%, the dry mass of the powdery porous material is 14.0-80.0%, and the dry mass of the precipitation aid is 0.05-0.5%.

In the present disclosure, the smaller the diameter or width of the fibrous material, the smaller the aspect ratio, and the larger the specific surface area of the fibrous material for the same mass, which means that there is more surface area for interaction with the powdery porous material having an acoustic reinforcing properties. On the other hand, the larger the diameter or width of the fibrous material, the larger the aspect ratio, the more significant the interweaving effect between the fibrous materials and the more complex the three-dimensional network structure formed, resulting in a better physical strength of the obtained acoustic reinforcing composite material. However, if the diameter or width of the fibrous material is too large, the surface of the acoustic reinforcing composite material prepared thereby becomes rougher and uneven. Moreover, since the aspect ratio of the fibrous material is too large, it is difficult for the fibrous material to disperse in water, and the fibrous materials entangle with each other, making it difficult to separate them into individual fibers. Based on this, in combination with the first and second solutions, in an implementable embodiment, the diameter or width of the fibrous material is in the range of 8-70 $\mu$m, and the aspect ratio thereof is in the range of 8-500, preferably 8-150. In the present disclosure, the "aspect ratio" refers to the ratio of length to diameter of the fibrous material. In some special fibrous materials, the "aspect ratio" may also be understood as the ratio of length to width.

In combination with the first and second solutions, in an implementable embodiment, the chemically synthesized fibers without hydrophilic modification comprises one or more of polypropylene fibers, polyamide fibers, polyethylene fibers, polyester fibers, polylactic acid fibers, polyetheretherketone fibers, polyphenylene sulfide fibers, and polyacrylonitrile fibers.

In combination with the first and second solutions, in an implementable embodiment, the hydrophilically modified chemically synthesized fibers comprise one or more of hydrophilically modified polypropylene fibers, hydrophilically modified polyamide fibers, hydrophilically modified polyethylene fibers, hydrophilically modified polyester fibers, hydrophilically modified polylactic acid fibers, hydrophilically modified polyetheretherketone fibers, hydrophilically modified polyphenylene sulfide fibers, and hydrophilically modified polyacrylonitrile fibers.

The hydrophilic modifying agent used in the present disclosure for the hydrophilic modification of the chemically synthesized fibers is not specifically required and may be reasonably selected based on actual operational needs. For example, in some embodiments of the present disclosure, the hydrophilic modifying agent may be maleic anhydride, and accordingly, the hydrophilically modified chemically synthesized fibers may be maleic anhydride-modified polypropylene fibers, maleic anhydride-modified polyester fibers, or the like.

The chemically synthesized fibers used in the present disclosure are characterized by having no significant interaction force between each other, such as hydrogen bonding and electrostatic attraction, and having a low density. The mechanical interweaving force between such fibrous materials is the main interaction force, which can create a three-dimensional space structure with high porosity, that is, a three-dimensional network structure, which may facilitate air circulation.

In combination with the first and second solutions, in an implementable embodiment, the cross-sectional shape of the fibrous material comprises a circular shape, a flat shape, a special shape, or the like, wherein the special shape comprises a cross-shaped structure, a core-sheath structure, a triangular structure, a clover structure, a "王"-shaped structure, a Y-shaped structure, a hollow structure, or the like.

In combination with the first and second solutions, in an implementable embodiment, a single type of chemically synthesized fibers or a combination of multiple types of chemically synthesized fibers may be selected as the fibrous material, and a combination of chemically synthesized fibers with different diameters or widths and/or different aspect ratios may also be selected. Preferably, the chemically synthesized fibers comprise a combination of two or more types of chemically synthesized fibers with different diameters or widths and/or different aspect ratios.

The powdery porous material used in the present disclosure have acoustic enhancement properties and may be selected from powdery porous materials commonly used in the field for producing acoustic enhancement materials. In combination with the first and second solutions, in an implementable embodiment, the powdery porous material comprises one or more of zeolite molecular sieve, activated silica, activated carbon, calcium carbonate with a porous surface, calcium silicate with a porous surface, alumina, hydrogels, aerogels, and the like.

In combination with the first and second solutions, in an implementable embodiment, the zeolite molecular sieve has a particle size of 0.5-10 $\mu$m, and comprises micropores having a pore size of 0.3-0.7 nm and mesopores having a pore size of 10-30 nm.

In combination with the first and second solutions, in an implementable embodiment, the zeolite molecular sieve comprises one or more of MFI-structured molecular sieve, FER-structured molecular sieve, CHA-structured molecular sieve, MEL-structured molecular sieve, TON-structured molecular sieve, MTT-structured molecular sieve, and the like.

In combination with the first and second solutions, in an implementable embodiment, the precipitation aid comprises one or more of polyacrylamide, starch, polyethyleneimine, polyimide, guar gum, and the like.

In combination with the first and second solutions, in an implementable embodiment, the GSM of the acoustic reinforcing composite material is in the range of 50-1200 g/m$^2$.

In combination with the first and second solutions, in an implementable embodiment, the shape of the acoustic reinforcing composite material comprises a sheet shape, a block shape, an irregular shape, or the like. When applying the acoustic reinforcing composite material, those skilled in the art may reasonably select an acoustic reinforcing composite material with a suitable shape as desired. In addition, those skilled in the art may also obtain the acoustic reinforcing composite material having the target shape on the basis of the fabrication method provided by the present disclosure in combination with conventional means.

In combination with the first and second solutions, in an implementable embodiment, the acoustic reinforcing composite material is formed by interweaving a fibrous material and has a three-dimensional network structure inside, and wherein a powdery porous material is attached to the surface of the fibrous material by means of a precipitation aid; wherein the fibrous material comprises plant fibers and hydrophilically modified chemically synthesized fibers.

In the acoustic reinforcing composite material provided by the present disclosure, the powdery porous material is attached to the three-dimensional network structure and the surface of the acoustic reinforcing composite material.

In combination with the first and second solutions, in an implementable embodiment, based on 100% of the total weight of the acoustic reinforcing composite material, the dry mass of the hydrophilic fibers is 19.50-85.95%, the dry mass of the powdery porous material is 14.0-80.0%, and the dry mass of the precipitation aid is 0.05-0.5%.

In the present disclosure, the smaller the diameter or width of the fibrous material, the smaller the aspect ratio, and the larger the specific surface area of the fibrous material for the same mass, which means that there is more surface area for interaction with the powdery porous material having an acoustic reinforcing properties. On the other hand, the larger the diameter or width of the fibrous material, the larger the aspect ratio, the more significant the interweaving effect between the fibrous materials and the more complex the three-dimensional network structure formed, resulting in a better physical strength of the obtained acoustic reinforcing composite material. However, if the diameter or width of the fibrous material is too large, the surface of the acoustic reinforcing composite material prepared thereby becomes rougher and uneven. Moreover, since the aspect ratio of the fibrous material is too large, it is difficult for the fibrous material to disperse in water, and the fibrous materials entangle with each other, making it difficult to separate them into individual fibers. Based on this, in combination with the first and second solutions, in an implementable embodiment, the diameter or width of the fibrous material is in the range of 8-70 $\mu$m, and the aspect ratio thereof is in the range of 8-500, preferably 8-150. In the present disclosure, the "aspect ratio" refers to the ratio of length to diameter of the fibrous material. In some special fibrous materials, the "aspect ratio" may also be understood as the ratio of length to width.

In combination with the first and second solutions, in an implementable embodiment, the hydrophilically modified chemically synthesized fibers comprise one or more of hydrophilically modified polypropylene fibers, hydrophilically modified polyamide fibers, hydrophilically modified polyethylene fibers, hydrophilically modified polyester fibers, hydrophilically modified polylactic acid fibers, hydrophilically modified polyetheretherketone fibers, hydrophilically modified polyphenylene sulfide fibers, and hydrophilically modified polyacrylonitrile fibers.

The hydrophilic modifying agent used in the present disclosure for the hydrophilic modification of the chemically synthesized fibers is not specifically required and may be reasonably selected based on actual operational needs. For example, in some embodiments of the present disclosure, the hydrophilic modifying agent may be maleic anhydride, and accordingly, the hydrophilically modified chemically synthesized fibers may be maleic anhydride-modified polypropylene fibers, maleic anhydride-modified polyester fibers, or the like.

The hydrophilically modified chemically synthesized fibers used in the present disclosure are characterized by having no significant interaction force between each other, such as hydrogen bonding and electrostatic attraction, and having a low density. The mechanical interweaving force between such fibrous materials is the main interaction force, which can create a three-dimensional space structure with high porosity, that is, a three-dimensional network structure, which may facilitate air circulation.

In combination with the first and second solutions, in an implementable embodiment, the cross-sectional shape of the hydrophilically modified chemically synthesized fibers comprises a circular shape, a flat shape, a special shape, or the like, wherein the special shape comprises a cross-shaped structure, a core-sheath structure, a triangular structure, a clover structure, a "⊥"-shaped structure, a Y-shaped structure, a hollow structure, or the like.

The plant fibers used in the present disclosure contains a large number of hydrophilic groups, such as hydroxyl groups, carboxyl groups, and the like. The acoustic reinforcing composite material containing plant fibers are provided in the rear cavity of the loudspeaker, and during practical use, water molecules in the air may be preferentially absorbed and fixed by the plant fibers, thereby reducing the performance degradation of the powdery porous material particles due to water molecules, and fully improving the service life of the acoustic reinforcing composite material inside the rear cavity.

In combination with the first and second solutions, in an implementable embodiment, depending on variations of diameter or width, the plant fibers can be divided into two categories, including fine plant fibers and/or thick plant fibers, wherein the diameter or width of the fine plant fibers is in the range of 8 $\mu$m or more and less than 30 $\mu$m, and the diameter or width of the thick plant fibers is in the range of 30-70 $\mu$m.

The dry mass ratio of the thick plant fibers to the fine plant fibers is (100-0):(0-100), preferably (100-30):(0-70). When the plant fibers comprise both fine plant fibers and thick plant fibers, the dry mass ratio of the thick plant fibers to the fine plant fibers is (30-80):(20-70).

In combination with the first and second solutions, in an implementable embodiment, the aspect ratio of the plant fibers is 8-150.

In combination with the first and second solutions, in an implementable embodiment, the plant fibers are a fibrous material produced from natural plants as raw materials, and the natural plants comprise one or more of softwood, hardwood, bast fiber crops, bamboo, rice straw, bagasse, reed, cotton, and the like.

The method for producing plant fibers from natural plants is a conventional method, which may be reasonably adjusted according to the characteristics of the natural plants and the performance of the target plant fibers. For example, in some embodiments of the present disclosure, the preparation method comprises: removing lignin and most of the hemicellulose from the natural plant, followed by bleaching treatment or without bleaching treatment, to obtain a fibrous material mainly composed of cellulose, that is, the plant fibers.

In combination with the first and second solutions, in an implementable embodiment, a single type of fibers or a combination of multiple types of fibers may be selected as the fibrous material, and a combination of fibers with different diameters or widths and/or different aspect ratios may also be selected. Preferably, the fibrous material comprises a combination of two or more types of fibers with different diameters or widths and/or different aspect ratios.

In combination with the first and second solutions, in an implementable embodiment, the dry mass ratio of the plant fibers to the hydrophilically modified chemically synthesized fibers is (98-70):(2-30), preferably (95-80):(5-20).

The powdery porous material used in the present disclosure have acoustic enhancement properties and may be selected from powdery porous materials commonly used in the field for producing acoustic enhancement materials. In combination with the first and second solutions, in an implementable embodiment, the powdery porous material comprises one or more of zeolite molecular sieve, activated silica, activated carbon, calcium carbonate with a porous surface, calcium silicate with a porous surface, alumina, hydrogels, aerogels, and the like.

In combination with the first and second solutions, in an implementable embodiment, the zeolite molecular sieve has a particle size of 0.5-10 $\mu$m, and comprises micropores having a pore size of 0.3-0.7 nm and mesopores having a pore size of 10-30 nm.

In combination with the first and second solutions, in an implementable embodiment, the zeolite molecular sieve comprises one or more of MFI-structured molecular sieve, FER-structured molecular sieve, CHA-structured molecular sieve, MEL-structured molecular sieve, TON-structured molecular sieve, MTT-structured molecular sieve, and the like.

In combination with the first and second solutions, in an implementable embodiment, the precipitation aid comprises one or more of polyacrylamide, starch, polyethyleneimine, polyimide, guar gum, and the like.

In combination with the first and second solutions, in an implementable embodiment, the GSM of the acoustic reinforcing composite material is in the range of 50-1200 g/m$^2$.

In combination with the first and second solutions, in an implementable embodiment, the shape of the acoustic reinforcing composite material comprises a sheet shape, a block shape, an irregular shape, or the like. When applying the acoustic reinforcing composite material, those skilled in the art may reasonably select an acoustic reinforcing composite material with a suitable shape as desired. In addition, those skilled in the art may also obtain the acoustic reinforcing composite material having the target shape on the basis of the fabrication method provided by the present disclosure in combination with conventional means.

In combination with the first solution, the present disclosure provides a third solution, in which the acoustic reinforcing composite material is formed by interweaving a fibrous material and has a three-dimensional network structure inside, and wherein a powdery porous material is attached to (precipitated onto) the surface of the fibrous material by means of a precipitation aid;

wherein the fibrous material comprises one or more of inorganic fibers, plant fibers and composite chemical fibers. The acoustic reinforcing composite material provided by the third solution of the present disclosure is more loosely structured with high porosity, which facilitates the acoustic performance of powdery porous materials.

In the present disclosure, the fibrous material is interwoven to form an acoustic reinforcing composite material, and a three-dimensional network structure is formed inside the acoustic reinforcing composite material during the interweaving process. Since the powdery porous material is attached to the surface of the fibrous material by means of a precipitation aid, it is equivalent to the case that the powdery porous material is also attached to the three-dimensional network structure and the surface of the acoustic reinforcing composite material.

In combination with the first and the third solution, in an implementable embodiment, based on 100% of the total weight of the acoustic reinforcing composite material, the dry mass of the fibrous material is 19.50-85.95%, the dry mass of the powdery porous material is 14.0-80.0%, preferably 50.0-70.0%, and the dry mass of the precipitation aid is 0.05-0.5%.

In combination with the first and the third solution, in an implementable embodiment, the diameter or width of the fibrous material is in the range of 3-70 $\mu$m, and the aspect ratio thereof is in the range of 8-500. In the present disclosure, the "aspect ratio" refers to the ratio of length to diameter of the fibrous material. In some special fibrous materials, the "aspect ratio" may also be understood as the ratio of length to width.

In combination with the first and the third solution, in an implementable embodiment, the diameter or width of the inorganic fibers is in the range of 3-45 $\mu$m, and the aspect ratio thereof is 10-500.

In combination with the first and the third solution, in an implementable embodiment, the inorganic fibers comprise one or more of basalt fibers, glass fibers, quartz fibers, asbestos fibers, volcanic fibers, metal fibers, alumina fibers, carbon fibers, and the like.

Said inorganic fibers used in the present disclosure are characterized by absorbing no water or absorbing only a small amount of water, without deforming in an aqueous system environment. Since the inorganic fibers have characteristics such as being stiff, having high rigidity and not deforming, they play an important role in maintaining and retaining the morphology, stiffness, and other properties of the acoustic reinforcing composite material.

In combination with the first and the third solution, in an implementable embodiment, the diameter or width of the plant fibers is in the range of 8-70 $\mu$m, and the aspect ratio thereof is in the range of 8-150.

In combination with the first and the third solution, in an implementable embodiment, the moisture absorption rate of the plant fibers is 16.0-31.5%, preferably 20.0-31.5%.

In combination with the first and the third solution, in an implementable embodiment, the plant fibers are a fibrous material produced from natural plants as raw materials, and the natural plants comprise one or more of softwood, hardwood, bast fiber crops, bamboo, rice straw, bagasse, reed, cotton, and the like.

The plant fibers used in the present disclosure contains a large number of hydrophilic groups, such as hydroxyl groups, carboxyl groups, and the like. During the practical use of the acoustic reinforcing composite material containing plant fibers in the rear cavity, water molecules in the air may be preferentially absorbed and fixed by the plant fibers, thereby reducing the performance degradation of the powdery porous material particles due to water molecules, and fully improving the service life of the acoustic reinforcing composite material inside the rear cavity.

The plant fibers selected in the present disclosure are primarily composed of cellulose, with containing only trace amounts of hemicellulose and lignin. To improve the acoustic performance of the acoustic reinforcing composite material, the primary approach is to increase the mass percentage of the powdery porous material with an acoustic reinforcing properties in the acoustic reinforcing composite material. The powdery porous material particles used in the present disclosure are inorganic substances and significantly smaller in size than the fibrous material, and no significant interfacial forces exist between them in an aqueous system.

With respect to the above problems, in the present disclosure, a small amount of precipitation aid is added. The precipitation aid itself has viscosity and can fix the powdery porous material particles on the surface of the fibrous material through adhesion, which is equivalent to fixing the powdery porous material particles in the three-dimensional network structure inside the acoustic reinforcing composite material by the precipitation aid. However, under the action of external forces (such as continuous vibration, collision, the like.), there is a risk that the powdery porous material particles may fall off from the surface of the acoustic reinforcing composite material, that is, powder shedding.

Therefore, it is of great significance to increase the specific surface area of the plant fibers and improve the binding sites between the plant fibers and the powdery porous material particles. The surface binding sites of some plant fibers meet the requirements. However, the surface of others is relatively smooth and dense, which requires destroying the primary wall on the surface of the plant fibers and dispersing the fibers bundles into individual fibers, without damaging the aspect ratio of the plant fibers or with minimal damage to the aspect ratio by means of certain physical and chemical methods, such as grinding, hammering, and the like, thereby significantly increasing the specific surface area of the plant fibers and exposing more hydrophilic groups. The increase in the specific surface area of the plant fibers not only improves the binding sites between the plant fibers and the powdery porous material particles, reduces the risk of powder shedding of the acoustic reinforcing composite material, but also improves the bonding strength between the fibers, thereby enhancing the internal bonding strength of the acoustic reinforcing composite material.

For the plant fibers selected in the present disclosure, since the distribution of fine fibers on the surface, the roughness, the specific surface area, and other parameters of the plant fibers are not easy to measure, the present disclosure indirectly adopts the parameter of "moisture absorption rate" as a comprehensive index for evaluating the specific surface area and other properties of the plant fibers. The greater the dispersion of fiber bundles into individual fibers on the surface of plant fibers, the larger the specific surface area, and the stronger the capacity to bind water.

In the present disclosure, the "moisture absorption rate" of the plant fibers is measured according to the following method.

a certain mass (about 2.0 g) of plant fibers are weighed and added to pure water at 20°C; the dry mass concentration of the plant fibers is adjusted to about 0.5%, followed by shear dispersion to disperse the plant fibers into individual fibers; after the plant fibers are completely dispersed into individual fibers, the dispersion of the plant fibers is filtered through a 200-mesh sieve; water without interaction with the plant fibers will flow away under gravity; after standing for 10 minutes, the wet plant fibers are collected and weighed, and the mass is recorded as X, where X comprises the dry mass of the plant fibers and the mass of water absorbed by it;
the wet plant fibers with a mass of X is transferred to an oven at 110°C and dried to constant weight; at this time, the mass is recorded as Y, where Y is the dry mass of the plant fibers; the mass of pure water absorbed by the wet plant fibers with a mass of X is recorded as Z, and Z = X - Y.

The moisture absorption rate of the plant fibers is calculated by the following Equation 1:

$$\text{Moisture absorption rate} = (Z/Y) \times 100\% \qquad \text{Equation 1.}$$

For the same type of plant fibers, the greater the moisture absorption rate, the stronger its capacity to absorb water, which indicates larger specific surface area and more fine fibers exposed on the surface. It is desirable to reduce the risk of powder shedding and improve the internal bonding strength of the material in the three-dimensional network structure of the acoustic reinforcing composite material.

The method for producing plant fibers from natural plants is a conventional method, which may be reasonably adjusted according to the characteristics of the natural plants and the performance of the target plant fibers. For example, in some embodiments of the present disclosure, the preparation method comprises: removing lignin and most of the hemicellulose from the natural plant, followed by bleaching treatment or without bleaching treatment, to obtain a fibrous material mainly composed of cellulose, that is, the plant fibers.

In combination with the first and the third solution, in an implementable embodiment, a combination of fibrous materials with different diameters or widths and different aspect ratios may be selected as the fibrous material.

Preferably, the fibrous material is selected from a combination of two or more types of fibrous materials with different diameters or widths and different aspect ratios.

In combination with the first and the third solution, in an implementable embodiment, the diameter or width of the composite chemical fibers are in the range of 10-70 μm, and the aspect ratio thereof is in the range of 10-200.

In combination with the first and the third solution, in an implementable embodiment, the composite chemical fibers comprise one or more of composite chemical fibers with a core-sheath structure, parallel structure, sea-island structure, or the like.

In combination with the first and the third solution, in an implementable embodiment, the composite chemical fibers with a core-sheath structure comprises a core layer and a sheath layer covering the core layer, wherein the material of the sheath layer comprises chemical fibers having a melting point not higher than 140°C, and the material of the core layer comprises chemical fibers having a melting point not lower than 150°C.

In combination with the first and the third solution, in an implementable embodiment, the core layer comprises ordinary polyester fibers and/or polypropylene fibers, and the sheath layer comprises polyethylene fibers and/or modified polyester fibers.

In some embodiments of the present disclosure, the composite chemical fibers may be chemical fibers with a core layer of ordinary polyester fibers and a sheath layer of polyethylene fibers, chemical fibers with a core layer of polypropylene fibers and a sheath layer of polyethylene fibers, chemical fibers with a core layer of ordinary polyester fibers and a sheath layer of modified polyester fibers, and the like.

The melting point of the ordinary polyester fibers is 250-265°C, the melting point of the polyethylene fibers is 110-130°C, the melting point of the polypropylene fibers is 150-170°C, and the modified polyester fibers has a relatively low melting point of 100-140°C.

In the case that the temperature is not lower than the melting point of the sheath layer contained in the composite chemical fibers, the sheath layer in the composite chemical fibers begins to melt. After melting, it can bond with other fibers or powdery porous material particles in contact with it. At this time, the core layer does not melt and maintains the original structure and morphology of the composite chemical fibers. Therefore, the reasonable utilization of the composite chemical fibers can significantly improve the internal bonding strength of the acoustic reinforcing composite material and can reduce the risk of powder shedding. Moreover, since the core layer fibers are not melted, the composite chemical fibers may not shrink significantly, and thus the thickness of the acoustic reinforcing composite material is not reduced and the morphology and fluffiness of the acoustic reinforcing composite material is not changed.

In combination with the first and the third solution, in an implementable embodiment, the composite chemical fibers with a parallel structure comprises chemical fibers having a melting point not higher than 140°C and chemical fibers having a melting point not lower than 150°C.

In combination with the first and the third solution, in an implementable embodiment, the chemical fibers having a melting point not higher than 140°C comprises polyethylene fibers and/or modified polyester fibers, and the chemical fibers having a melting point not lower than 150°C comprises ordinary polyester fibers and/or polypropylene fibers. The melting point of the ordinary polyester fibers is 250-265°C, the melting point of the polyethylene fibers is 110-130°C, the melting point of the polypropylene fibers is 150-170°C, and the modified polyester fibers has a relatively low melting point of 100-140°C.

The composite chemical fibers with a sea-island structure used in the present disclosure, that is, the sea-island fibers, involves dispersing one polymer within another, where the dispersed phase in the cross-section of the fibers exists in an "island" state, while the matrix corresponds to the "sea". Seen from the cross-section of the sea-island fibers, one component is surrounded by another in a fine and dispersed state, resembling numerous islands within the sea.

In combination with the first and the third solution, in an implementable embodiment, the composite chemical fiber with a sea-island structure comprises a matrix and a dispersed phase, the material of the matrix comprises chemical fibers having a melting point not higher than 140°C, and the material of the dispersed phase comprises chemical fibers having a melting point not lower than 150°C.

Preferably, the material of the matrix comprises polyethylene fibers and/or modified polyester fibers, and the like; and the material of the dispersed phase comprises ordinary polyester fibers and/or polypropylene fibers, and the like.

When the service temperature of the composite chemical fibers with a parallel structure and the composite chemical fibers with a sea-island structure is between the melting point temperatures of the two chemical components contained with different melting points, the chemical fibers with a low melting point melts has a bonding function, while the chemical fibers with a high melting point does not melt, maintaining the structure and morphology of the composite fibers. As such, by means of the synergistic effect of the two chemical components with different melting points, the internal bonding strength of the acoustic reinforcing composite material can be significantly improved, the risk of powder shedding can be reduced, the thickness of the acoustic reinforcing composite material may not be reduced, and the morphology and fluffiness of the acoustic reinforcing composite material may not be changed.

The composite chemical fibers with a core-sheath structure, the composite chemical fibers with a parallel structure (that is, parallel composite fibers), and the composite chemical fibers with a sea-island structure (that is, sea-island fibers) used in the present disclosure are all conventional products and are commercially available.

In combination with the first and the third solution, in an implementable embodiment, the dry mass ratio of the plant fibers to the composite chemical fibers is (98-60):(2-40).

The powdery porous material used in the present disclosure has an acoustic reinforcing properties, and a powdery porous material commonly used in the field for producing acoustic reinforcing propertiesal materials may be selected. In combination with the first and the third solution, in an implementable embodiment, the powdery porous material comprises one or more of zeolite molecular sieve, activated silica, activated carbon, calcium carbonate with a porous surface, calcium silicate with a porous surface, alumina, hydrogels, aerogels, and the like.

In combination with the first and the third solution, in an implementable embodiment, the zeolite molecular sieve has a particle size of 0.5-10 $\mu$m, and comprises micropores having a pore size of 0.3-0.7 nm and mesopores having a pore size of 10-30 nm.

To improve the acoustic enhancement effect of the acoustic reinforcing composite material to a greater extent, in combination with the first and the third solution, in an implementable embodiment, the zeolite molecular sieve comprises one or more of MFI-structured molecular sieve, FER-structured molecular sieve, CHA-structured molecular sieve, MEL-structured molecular sieve, TON-structured molecular sieve, MTT-structured molecular sieve, and the like.

In combination with the first and the third solution, in an implementable embodiment, the precipitation aid comprises one or more of polyacrylamide, starch, polyethyleneimine, polyimide, guar gum, and the like.

In combination with the first and the third solution, in an implementable embodiment, the weight of the acoustic reinforcing composite material is in the range of 50-1200 g/m$^2$.

In combination with the first and the third solution, in an implementable embodiment, the shape of the acoustic reinforcing composite material comprises a sheet shape, a block shape, an irregular shape, or the like. When applying the acoustic reinforcing composite material, those skilled in the art may reasonably select an acoustic reinforcing composite material with a suitable shape as desired. In addition, those skilled in the art may also obtain the acoustic reinforcing composite material having the target shape on the basis of the fabrication method provided by the present disclosure in combination with conventional means.

The acoustic reinforcing composite material provided by the third solution of the present disclosure has high strength. After drop testing, the surface of the acoustic reinforcing composite material does not shed powder, and it is firmly bonded to the double-sided tape, without internal separation phenomena of the acoustic reinforcing composite material. This is an important condition to ensure the long-term stable operation of the acoustic reinforcing composite material in the loudspeaker cavity.

In the second aspect, the present disclosure provides a method for producing said acoustic reinforcing composite material, comprising:

Step 1: dispersing the fibrous material, the powdery porous material, and the precipitation aid in water separately, to obtain a fibrous material dispersion, a powdery porous material dispersion, and a precipitation aid dispersion, respectively;

Step 2: adding the powdery porous material dispersion to the fibrous material dispersion and mixing uniformly, and then adding the precipitation aid dispersion and mixing uniformly to interweave the fibrous material while simultaneously precipitating the powdery porous material onto the surface of the fibrous material;

Step 3: filtering the mixed liquid obtained in Step 2 to obtain a precursor material;

Step 4: drying the precursor material to obtain the acoustic reinforcing composite material.

In combination with the second aspect, in an implementable embodiment, when the fibrous material comprises composite chemical fibers, the method further comprises:

Step 5: subjecting the acoustic reinforcing material to a high-temperature treatment at a temperature not lower than the melting point of the sheath layer contained in the composite chemical fibers, such that the sheath layer in the composite chemical fibers are melted while the core layer is not. The melted sheath layer has a bonding function. Following the temperature-holding period, the material is cooled to room temperature to obtain a high-strength and efficient acoustic reinforcing material. The temperature for the high-temperature treatment needs to be selected depending on the melting point of the sheath layer. In an implementable embodiment, the high-temperature treatment may be carried out in a forced-air drying oven at a temperature of 110-145°C, preferably 130-145°C, while holding the temperature for 5-20 minutes.

The acoustic reinforcing composite material is prepared by an integrated molding method. This integrated molding refers to the process during the formation of the acoustic reinforcing composite material where fibrous materials coated with powdery porous materials interweave to form a three-dimensional network structure, as known as "co-molding".

In combination with the second aspect, in an implementable embodiment, in Step 1, based on 100% of the total weight of the fibrous material dispersion, the dry mass concentration of the fibrous material is 0.2-4%, preferably 0.5-4%.

In combination with the second aspect, in an implementable embodiment, in Step 1, based on 100% of the total weight of the powdery porous material dispersion, the dry mass concentration of the powdery porous material is 1-50%.

In combination with the second aspect, in an implementable embodiment, in Step 1, based on 100% of the total weight of the precipitation aid dispersion, the dry mass concentration of the precipitation aid is 0.01-4.00%.

In combination with the second aspect, in an implementable embodiment, in Step 1, the water comprises one of deionized water, distilled water, reverse osmosis water and a mixture thereof.

In combination with the second aspect, in an implementable embodiment, in Step 2, to achieve faster and more thorough mixing, this step is performed under stirring conditions. During Step 2, the interweaving of the fibrous material and the precipitation of the powdery porous material on the surface of the fibrous material are performed simultaneously.

In combination with the second aspect, in an implementable embodiment, in Step 3, the mixed liquid obtained in Step 2 is filtered to initially remove the water in the mixed liquid. The moisture content of the obtained material may be 10-80 wt%. During the filtration process, water is directly filtered through the filter screen, while the fibrous materials with powdery porous materials precipitated on their surfaces are gradually piled up, and the fibrous materials are interlaced to build a three-dimensional network structure.

The filtration in Step 3 is a conventional operation, which may be adjusted depending on the practical on-site operation conditions. For example, in some embodiments of the present disclosure, the filtration is suction filtration.

The shape of the obtained acoustic reinforcing composite material may be controlled through the filtration operation in Step 3. For example, if multiple filtrations are performed in Step 3, the thickness of the stacked material will increase, forming a block-shaped acoustic reinforcing composite material. That is, in the present disclosure, the thickness of the acoustic reinforcing composite material may be controlled by filtration. In addition, molds having different shapes may be selected for filtration as desired to obtain an irregular-shaped acoustic reinforcing composite material. Obviously, the block-shaped or irregular-shaped acoustic reinforcing composite material obtained after drying may also be cut to obtain an irregular-shaped acoustic reinforcing composite material.

In combination with the second aspect, in an implementable embodiment, in Step 4, the drying is a conventional operation, which may be adjusted depending on the practical on-site operation conditions, as long as the moisture in the precursor material is removed. For example, in some embodiments of the present disclosure, the drying is performed on the precursor material by using equipment such as a vacuum freeze dryer or a forced-air drying oven.

There is no interaction between the powdery porous material with an acoustic reinforcing properties and the fibrous material in the aqueous system. Therefore, a precipitation aid is used in the production of the acoustic reinforcing composite material. The precipitation aid itself has viscosity and adhesion, which may precipitate the particles of the powdery porous material on the surface of the fibrous material.

In the third aspect, the present disclosure further provides a loudspeaker, comprising one or more acoustic sensors and one or more housings, wherein the one or more acoustic sensors and the one or more housings are combined to form a rear cavity of the loudspeaker, and wherein the acoustic reinforcing composite material described above is provided in the rear cavity of the loudspeaker.

In the fourth aspect, the present disclosure further provides an electronic device comprising a loudspeaker, wherein the acoustic reinforcing composite material described above is provided in the rear cavity of the loudspeaker.

In combination with the fourth aspect, in an implementable embodiment, the electronic device comprises a smart phone, a TWS earphone, a headphone, a smart glass, a smart watch, a VR device, an AR device, a tablet computer, a lightweight laptop, or the like.

Compared with the prior art, the beneficial technical effects achievable by the present disclosure comprise:

1. Efficient mass production. The present disclosure can achieve efficient production of the acoustic reinforcing composite material without special equipment, raw materials or chemicals.
2. Arbitrary cutting. The acoustic reinforcing composite material can be cut into desired shapes depending on the size and dimensions of the rear cavity of the loudspeaker and filled into the rear cavity of the loudspeaker.
3. Efficient acoustic performance. The acoustic reinforcing composite material provided by the present disclosure has efficient acoustic performance. For powdery porous materials with acoustic reinforcing properties per unit mass, their acoustic performances are superior to that of commonly used acoustic reinforcing particles on the market.
4. The acoustic reinforcing composite material provided by the present disclosure exhibits stable acoustic performances. After high temperature and high humidity storage conducted in accordance with the technical contents specified in Section 7.8.4 in the group standard "Porous Sound-Absorbing Particles for Microspeakers" (Standard Number: T/CECA 78-2022), its acoustic performance remains unaffected.

BRIEF DESCRIPTION OF THE DRAWINGS

To illustrate more clearly the technical solutions in the embodiments of the present invention or the prior art, a brief introduction to the drawings required for the description of the embodiments is provided below. It is evident that the drawings described below represent a certain embodiment of the present invention. For those skilled in the art, other drawings may be derived from the drawings without involving creative labor.

Fig. 1 is the surface morphology of the sheet-like acoustic reinforcing composite material obtained in Example 1 according to the present disclosure.

Fig. 2 is the surface morphology of the sheet-like acoustic reinforcing composite material obtained in Example 3 according to the present disclosure.

Fig. 3 is the surface morphology of the sheet-like acoustic reinforcing composite material obtained in Example 4 according to the present disclosure.

Fig. 4 is the surface morphology of the sheet-like acoustic reinforcing composite material obtained in Example 6 according to the present disclosure.

Fig. 5 is the surface morphology of the sheet-like acoustic reinforcing composite material obtained in Example 7 according to the present disclosure.

Fig. 6 is the surface morphology of the sheet-like acoustic reinforcing composite material obtained in Example 8 according to the present disclosure.

Fig. 7 is a SEM image of the sheet-like acoustic reinforcing composite material provided in Example 2 according to the present disclosure.

Fig. 8 is a schematic diagram of morphology of the hydroxyl-containing softwood fibers used in Example 10 according to the present disclosure.

Fig. 9 is a schematic diagram of morphology of the softwood fibers used in Example 12 according to the present disclosure.

Fig. 10 is a schematic diagram of morphology of the hardwood fibers used in Example 12 according to the present disclosure.

Fig. 11 is a schematic diagram of morphology of the softwood fibers used in Example 13 according to the present disclosure.

Fig. 12 is a schematic diagram of morphology of the hardwood fibers used in Example 13 according to the present disclosure.

Fig. 13 is a schematic diagram of morphology of the softwood fibers used in Comparative Example 11.

Fig. 14 is a schematic diagram of morphology of the softwood fibers used in Comparative Example 14.

Fig. 15 is a schematic diagram of morphology of the hardwood fibers used in Comparative Example 14.

Fig. 16 is a SEM image of the sheet-like acoustic reinforcing material provided in Example 10 according to the present disclosure.

Fig. 17 is the surface morphology of the sheet-like acoustic reinforcing material provided in Example 14 of the present disclosure after the drop test in Test Example 7 according to the present disclosure.

Fig. 18 is the surface morphology of the sheet-like acoustic reinforcing material provided in Comparative Example 14 after the drop test in Test Example 7 according to the present disclosure.

Fig. 19 is a SEM image of the sheet-like acoustic reinforcing composite material provided in Example 1 according to the present disclosure.

Fig. 20 is a SEM image of the sheet-like acoustic reinforcing composite material provided in Example 7 according to the present disclosure.

Fig. 21 is the surface morphology of the sheet-like acoustic reinforcing composite material obtained in Example 16 according to the present disclosure.

Fig. 22 is the surface morphology of the sheet-like acoustic reinforcing composite material obtained in Example 17 according to the present disclosure.

Fig. 23 is the surface morphology of the sheet-like acoustic reinforcing composite material obtained in Example 18 according to the present disclosure.

Fig. 24 is a SEM image of the sheet-like acoustic reinforcing composite material obtained in Example 17 according to the present disclosure.

DETAILED DESCRIPTION OF EMBODIMENTS

It should be noted that the term "comprise" and any variations thereof in the specification, claims and the above drawings of the present disclosure are intended to cover non-exclusive inclusion. For example, a process, method, system, product or device that comprises a series of steps or units is not necessarily limited to the clearly listed steps or units, but may comprise other steps or units that are not clearly listed or are inherent to the process, method, product or device.

A "range", as disclosed in the present disclosure, is given in the form of a lower limit and an upper limit. There may be one or more lower limits, and one or more upper limits, respectively. A given range is defined by selecting a lower limit and an upper limit, and the selected lower and upper limits define the boundaries of a particular range. All ranges limited in this manner are combinable, i.e., any lower limit can be combined with any upper limit to form a range. For example, if the ranges 60-120 and 80-110 are listed for a specific parameter, this is understood to mean that the ranges 60-110 and 80-120 are also expectable. In addition, for a range, if the minimum values listed are 1 and 2 and the maximum values listed are 3, 4 and 5, all the following ranges can be expected: 1-3, 1-4, 1-5, 2-3, 2-4 and 2-5.

In the present disclosure, the numerical range "a-b" indicates an abbreviated representation of any combination of real numbers between a and b, where both a and b are real numbers, unless specified otherwise. For example, the numerical range "0-5" indicates that all real numbers between "0-5" are already listed in the present disclosure, and "0-5" is only an abbreviated representation of these combinations of values.

In the present disclosure, all embodiments as well as preferred embodiments mentioned in the present disclosure can be combined with each other to form new technical solutions, unless specified otherwise.

In the present disclosure, all technical features as well as preferred features mentioned in the present disclosure can be combined with each other to form new technical solutions, unless specified otherwise.

In the present disclosure, the term "two" as used in this specification means "at least two", unless specified otherwise.

In the present disclosure, all the steps mentioned herein may be performed sequentially or randomly, but preferably sequentially, unless specified otherwise. For example, the method comprising steps (a) and (b) indicates that the method may comprise steps (a) and (b) performed sequentially, or may comprise steps (b) and (a) performed sequentially. For example, when reference to the method may further comprise step (c), it means that step (c) may be added to the method in any order, for example, the method may comprise steps (a), (b) and (c), or may comprise steps (a), (c) and (b), or may comprise steps (c), (a) and (b), etc.

In order to make the objects, technical solutions and advantages of the present disclosure more clearly understood, the present disclosure is described in further detail below in conjunction with the tables and examples. The examples described below are a part of the examples of the present disclosure, and not all of them. They are used only to illustrate the present disclosure and should not be regarded as limiting the scopes of the present disclosure. Based on the examples in the present disclosure, all other examples obtained by a person of ordinary skill in the art without inventive work fall within the protections scopes of the present disclosure. The examples, in which no specific conditions are indicated, are performed according to conventional conditions or conditions recommended by the manufacturer. The reagents or apparatus used, for which the manufacturers are not indicated, are conventional products that can be obtained by commercially available purchase.

In the examples, the "moisture absorption rate" of the plant fibers is measured according to the following method:

a certain mass (about 2.0 g) of plant fibers are weighed and added to pure water at 20°C; the dry mass concentration of the plant fibers is adjusted to about 0.5%, followed by shear dispersion to disperse the plant fibers into individual fibers; after the plant fibers are completely dispersed into individual fibers, the dispersion of the plant fibers is filtered through a 200-mesh sieve; water without interaction with the plant fibers will flow away under gravity; after standing for 10 minutes, the wet plant fibers are collected and weighed, and the mass is recorded as X, where X comprises the dry mass of the plant fibers and the mass of water absorbed by it;

the wet plant fibers with a mass of X is transferred to an oven at 110°C and dried to constant weight; at this time, the mass is recorded as Y, where Y is the dry mass of the plant fibers; the mass of pure water absorbed by the wet plant fibers with a mass of X is recorded as Z, and Z = X - Y.

The moisture absorption rate of the plant fibers is calculated by the following Equation 1:

$$\text{Moisture absorption rate} = (Z/Y) \times 100\% \qquad \text{Equation 1.}$$

In the examples, the dry mass of the powdery porous material in the sheet-like acoustic reinforcing composite material may be measured by the following method:

the sheet-like acoustic reinforcing composite material is dried in an oven at 110°C until constant weight, then accurately weighed and recorded as A;

the mass of the dried crucible was weighed accurately and recorded as B; the sheet-like acoustic reinforcing composite material with a mass of A was placed in the dried crucible; the crucible was then placed in a high-temperature muffle furnace with a heating program set to a heating rate of 0.5°C/min, heated from room temperature to 525°C, held at this temperature for 120 minutes, and then cooled to room temperature;

the total mass of the crucible and the powdery porous material with acoustic reinforcing properties in the crucible was weighed and recorded as C;

after high-temperature calcination of the sheet-like acoustic reinforcing composite material with a mass of A, the mass of the powdery porous material with acoustic reinforcing properties contained therein is recorded as D, where D=C-B;

in the sheet-like acoustic reinforcing composite material with a mass of A, the mass percentage of the powdery porous material with acoustic reinforcing properties is recorded as E, wherein E=(D/A)×100% Equation 2.

The strength of the sheet-like acoustic reinforcing composite material is one of the important indicators for evaluating the sheet-like acoustic reinforcing composite material, and also an important guarantee for the application stability of the sheet-like acoustic reinforcing composite material. In the test examples of the present disclosure, the strength of the sheet-like acoustic reinforcing composite material is measured according to the following method:

the sheet-like acoustic reinforcing composite material is cut into certain dimensions (for example, a square of $10 \times 10$ mm), and adhered to the inner wall of a metal test fixture with double-sided tape, where the metal test fixture is a rectangular prism with a mass of 220 g;

the height of the automatic drop tester is adjusted to 180 cm, and the metal test fixture adhered with the sheet-like acoustic reinforcing composite material is automatically dropped onto a marble floor from a height of 180 cm.

All six surfaces of the metal test fixture must undergo drop testing. For example, if each surface undergoes 6 drop tests, a total of 36 drop tests are performed. In certain special cases, each surface is required to undergo 12 drop tests, resulting in a total of 72 drop tests.

After the drop testing, observation is performed for: (i) whether the powdery porous material with acoustic reinforcing properties has detached from the surface of the sheet-like acoustic reinforcing composite material; (ii) whether internal separation or detachment occurs within the sheet-like acoustic reinforcement composite material.

The (i) described above is used to evaluate the binding strength between the powdery porous material and the three-dimensional network structure in the sheet-like acoustic reinforcing composite material. If no falling of the powdery porous material is observed after the drop testing, it indicates a high binding strength between the powdery porous material and the three-dimensional network structure in the sheet-like acoustic reinforcing composite material.

The (ii) described above is used to evaluate the internal binding strength of the sheet-like acoustic reinforcing composite material. Due to a certain thickness and mass of the sheet-like acoustic reinforcing composite material, separation may occur due to insufficient internal binding strength after the drop testing. If no internal separation and falling of the sheet-like acoustic reinforcing composite material is observed after the drop testing, it indicates a high internal binding strength.

Example 1

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of 100% of thick plant fibers, which are hydroxyl-containing softwood fibers with an average width of 45 $\mu$m and an aspect ratio of 70.

The precipitation aid is polyacrylamide with a molecular weight of 15 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 19.50%, the dry mass of the powdery porous material is 80.0%, and the dry mass of the precipitation aid is 0.5%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 2

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of thick plant fibers and fine plant fibers, wherein the thick plant fibers are hydroxyl-containing softwood fibers with an average width of 45 $\mu$m and an aspect ratio of 70, having a dry mass of 29.60%; the fine plant fibers are hydroxyl-containing hardwood fibers with an average width of 17 $\mu$m and an aspect ratio of 65, having a dry mass of 10%.

In the fibrous material, the dry mass ratio of the thick plant fibers to the fine plant fibers is 74.7:25.3.

The precipitation aid is starch with an average relative molecular weight of 550,000.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 39.60%, the dry mass of the powdery porous material is 60.0%, and the dry mass of the precipitation aid is 0.4%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 2-1

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of thick plant fibers and fine plant fibers, wherein the thick plant fibers are hydroxyl-containing softwood fibers with an average width of 45 $\mu$m and an aspect ratio of 70, having a dry mass of 12.7%; the fine plant fibers are hydroxyl-containing hardwood fibers with an average width of 17 $\mu$m and an aspect ratio of 65, having a dry mass of 26.9%.

In the fibrous material, the dry mass ratio of the thick plant fibers to the fine plant fibers is 32.1:67.9.

The precipitation aid is starch with an average relative molecular weight of 550,000.

The powdery porous material is a ZSM-5 molecular sieve with an average particle size of 1.5 $\mu$m, comprising

micropores having a pore size of 0.55 nm and mesopores having a pore size of 20 nm.

Based on 100% of the total weight of the sheet-like acoustic reinforcing composite material, the dry mass of the fibrous material was 39.60%, the dry mass of the powdery porous material was 60.0%, and the dry mass of the precipitation aid is 0.4%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 3

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of thick plant fibers, fine plant fibers and regenerated cellulose fibers, wherein the thick plant fibers are hydroxyl-containing softwood fibers with an average width of 45 μm and an aspect ratio of 70, having a dry mass of 30%; the fine plant fibers are hydroxyl-containing hardwood fibers with an average width of 17 μm and an aspect ratio of 65, having a dry mass of 30%; and the regenerated cellulose fibers are viscose fibers with an average diameter of 28 μm and an aspect ratio of 100, having a dry mass of 4.25%.

In the fibrous material, the dry mass ratio of the thick plant fibers to the fine plant fibers is 93.4:6.6.

The precipitation aid is guar gum with an average relative molecular weight of 1.6 million.

The powdery porous material is a ZSM-5 molecular sieve with an average particle size of 1.5 μm, comprising micropores having a pore size of 0.55 nm and mesopores having a pore size of 20 nm.

Based on 100% of the total weight of the sheet-like acoustic reinforcing composite material, the dry mass of the fibrous material is 64.25%, the dry mass of the powdery porous material is 35.5%, and the dry mass of the precipitation aid is 0.25%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 4

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of thick plant fibers, fine plant fibers, regenerated cellulose fibers and chemically synthesized fibers, wherein the thick plant fibers are hydroxyl-containing softwood fibers with an average width of 45 $\mu$m and an aspect ratio of 70, having a dry mass of 48.5%; the fine plant fibers are hydroxyl-containing hardwood fibers with an average width of 17 $\mu$m and an aspect ratio of 65, having a dry mass of 30%; the regenerated cellulose fibers are viscose fibers with an average diameter of 28 $\mu$m and an aspect ratio of 100, having a dry mass of 3.0%; and the chemically synthesized fibers are maleic anhydride-modified polyester fibers with an average diameter of 15 $\mu$m and an aspect ratio of 100, having a dry mass of 4.45%.

In the sheet-like acoustic reinforcing composite material, the plant fibers comprise thick plant fibers and fine plant fibers in a total amount of 78.5%.

In the fibrous material, the dry mass ratio of plant fibers, regenerated cellulose fibers and chemically synthesized fibers is 91.33:3.49:5.18.

In the fibrous material, hydrophilic natural fibers comprise thick plant fibers, fine plant fibers and viscose fibers, and the dry mass ratio of hydrophilic natural fibers to chemically synthesized fibers is 94.82:5.18.

The precipitation aid is polyacrylamide with a molecular weight of 15 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 85.95%, the dry mass of the powdery porous material is 14.0%, and the dry mass of the precipitation aid is 0.05%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 4-1

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of thick plant fibers, fine plant fibers, regenerated cellulose fibers and bacterial fibers, wherein the thick plant fibers are hydroxyl-containing softwood fibers with an average width of 45 $\mu$m and an aspect ratio of 70, having a dry mass of 48.5%; the fine plant fibers are hydroxyl-containing hardwood fibers with an average width of 17 $\mu$m and an aspect ratio of 65, having a dry mass of 24.75%; the regenerated cellulose fibers are viscose fibers with an average diameter of 28 $\mu$m and an aspect ratio of 100, having a dry mass of 8.5%; and the bacterial fibers are fibers produced by *Acetobacterium* with an average diameter of 10 $\mu$m and an aspect ratio of 100, having a dry mass of 4.2%.

In the sheet-like acoustic reinforcing composite material, the plant fibers comprise thick plant fibers and fine plant fibers in a total amount of 73.25%.

In the fibrous material, the dry mass ratio of plant fibers, regenerated cellulose fibers and bacterial fibers is 85.2:9.9:4.9.

The precipitation aid is polyacrylamide with a molecular weight of 15 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 85.95%, the dry mass of the powdery porous material is 14.0%, and the dry mass of the precipitation aid is 0.05%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 4-2

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of thick plant fibers, fine plant fibers, regenerated cellulose fibers and bacterial fibers, wherein the thick plant fibers are hydroxyl-containing softwood fibers with an average width of 45 $\mu$m and an aspect ratio of 70, having a dry mass of 48.5%; the fine plant fibers are hydroxyl-containing hardwood fibers with an average width of 17 $\mu$m and an aspect ratio of 65, having a dry mass of 30.05%; the regenerated cellulose fibers are viscose fibers with an average diameter of 28 $\mu$m and an aspect ratio of 100, having a dry mass of 1.6%; and the bacterial fibers are fibers produced by *Acetobacterium* with an average diameter of 10 $\mu$m and an aspect ratio of 100, having a dry mass of 0.8%.

In the sheet-like acoustic reinforcing composite material, the plant fibers comprise thick plant fibers and fine plant fibers in a total amount of 83.55%.

In the fibrous material, the dry mass ratio of plant fibers, regenerated cellulose fibers and bacterial fibers is 97.2:1.9:0.9.

The precipitation aid is polyacrylamide with a molecular weight of 15 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 85.95%, the dry mass of the powdery porous material is 14.0%, and the dry mass of the precipitation aid is 0.05%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 5

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of fine plant fibers, wherein the fine plant fibers are hydroxyl-containing hardwood fibers with an average width of 17 $\mu$m and an aspect ratio of 65, having a dry mass of 81.32%.

The precipitation aid is polyacrylamide with a molecular weight of 15 million.

The powdery porous material is a ZSM-5 molecular sieve with an average particle size of 1.6 $\mu$m, comprising micropores having a pore size of 0.54 nm and mesopores having a pore size of 25 nm.

Based on 100% of the total weight of the sheet-like acoustic reinforcing composite material, the dry mass of the fibrous material is 81.32%, the dry mass of the powdery porous material is 18.62%, and the dry mass of the precipitation aid is 0.06%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 6

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material was hydrophilically modified chemically synthesized fibers, wherein the hydrophilically modified chemically synthesized fibers are maleic anhydride-modified polyester fibers with an average width of 15 $\mu$m and an aspect ratio of 100, having a dry mass of 19.50%.

The precipitation aid is polyacrylamide with a molecular weight of 15 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 19.50%, the dry mass of the powdery porous material is 80.0%, and the dry mass of the precipitation aid is 0.5%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 7

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of hydrophilically modified chemically synthesized fibers, wherein the hydrophilically modified chemically synthesized fibers are maleic anhydride-modified polyester fibers with an average width of 45 $\mu$m and an aspect ratio of 70, having a dry mass of 39.60%.

The precipitation aid is starch with an average relative molecular weight of 550,000.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 39.60%, the dry mass of the powdery porous material is 60.0%, and the dry mass of the precipitation aid is 0.4%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 8

This example provides a sheet-like acoustic reinforcing composite material with a weight of 500 g/m$^2$, formed by

interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of hydrophilically modified chemically synthesized fibers and original chemically synthesized fibers (that is, chemically synthesized fibers without hydrophilic modification), wherein the hydrophilically modified chemically synthesized fibers are maleic anhydride-modified polyester fibers with an average width of 15 $\mu$m and an aspect ratio of 100, having a dry mass of 44.25%; and the original chemically synthesized fibers were ordinary polyester fibers, which are not modified by maleic anhydride, with an average width of 15 $\mu$m and an aspect ratio of 100, having a dry mass of 20.00%.

The dry mass ratio of hydrophilically modified chemically synthesized fibers to original chemically synthesized fibers is 68.9:31.1.

The precipitation aid is guar gum with an average relative molecular weight of 1.6 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 64.25%, the dry mass of the powdery porous material is 35.5%, and the dry mass of the precipitation aid is 0.25%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Comparative Example 1

This comparative example provides a sheet-like acoustic reinforcing composite material, differing from Example 1 only in that:

Based on 100% of the total weight of the sheet-like acoustic reinforcing composite material, the dry mass of the fibrous material is 14.0%, the dry mass of the powdery porous material is 85.0%, and the dry mass of the precipitation aid is 1.0%.

Comparative Example 2

This comparative example provides a sheet-like acoustic reinforcing composite material, differing from Example 4 only in that:

Based on 100% of the total weight of the sheet-like acoustic reinforcing composite material, the dry mass of the fibrous material is 90.95%, the dry mass of the powdery porous material is 9.0%, and the dry mass of the precipitation aid is 0.05%.

The fibrous material is composed of thick plant fibers, fine plant fibers, regenerated cellulose fibers and chemically synthesized fibers, wherein the thick plant fibers are hydroxyl-containing softwood fibers with an average width of 45 $\mu$m and an aspect ratio of 70, having a dry mass of 48.5%; the fine plant fibers are hydroxyl-containing hardwood fibers with an average width of 17 $\mu$m and an aspect ratio of 65, having a dry mass of 35%; the regenerated cellulose fibers are viscose fibers with an average diameter of 28 $\mu$m and an aspect ratio of 100, having a dry mass of 3.0%; and the chemically synthesized fibers are maleic anhydride-modified polyester fibers with an average diameter of 15 $\mu$m and an aspect ratio of 100, having a dry mass of 4.45%.

Comparative Example 3

This comparative example provides a sheet-like acoustic reinforcing composite material, differing from Example 1 only in that:

The hydrophilic fibers are composed of 100% of thick plant fibers, which are hydroxyl-containing softwood fibers with an average width of 45 $\mu$m and an aspect ratio of 7.5.

Comparative Example 4

This comparative example provides a sheet-like acoustic reinforcing composite material, differing from Example 5 only in that:

The hydrophilic fibers were composed of fine plant fibers, which are hydroxyl-containing hardwood fibers with an average width of 17 $\mu$m and an aspect ratio of 510.

Comparative Example 5

This comparative example provides a sheet-like acoustic reinforcing composite material, differing from Example 2 only in that:

The hydrophilic fibers were composed of thick plant fibers and fine plant fibers, wherein the thick plant fibers are hydroxyl-containing softwood fibers with an average width of 45 $\mu$m and an aspect ratio of 70, having a dry mass of 25.3%; the fine plant fibers are hydroxyl-containing hardwood fibers with an average width of 17 $\mu$m and an aspect ratio of 65, having a dry mass of 74.7%.

Comparative Example 6

This comparative example provides a sheet-like acoustic reinforcing composite material, differing from Example 6 only in that:

The fibrous material is composed of original chemically synthesized fibers, wherein the original chemically synthesized fibers were ordinary polyester fibers which are not modified by maleic anhydride, with an average width of 15 $\mu$m and an aspect ratio of 100, having a dry mass of 19.50%.

Comparative Example 7

This comparative example provides a sheet-like acoustic reinforcing composite material, differing from Example 7 only in that:

The fibrous material is composed of original chemically synthesized fibers, wherein the original chemically synthesized fibers were ordinary polypropylene fibers, which are not modified by maleic anhydride, with an average width of 45 $\mu$m and an aspect ratio of 70, having a dry mass of 39.60%.

Comparative Example 8

This comparative example provides a sheet-like acoustic reinforcing composite material, differing from Example 6 only in that:

The hydrophilically modified chemically synthesized fibers are maleic anhydride-modified polypropylene fibers with an average width of 15 $\mu$m and an aspect ratio of 7.5.

Comparative Example 9

This comparative example provides a sheet-like acoustic reinforcing composite material, differing from Example 6 only in that:

The hydrophilically modified chemically synthesized fibers are maleic anhydride-modified polypropylene fibers with an average width of 15 $\mu$m and an aspect ratio of 510.

Test Example 1

In this test example, each the sheet-like acoustic reinforcing composite materials provided in Examples 1-8 and Comparative Examples 1-9 as described above was cut into a size of 10 $\times$ 10 mm and then weighed. Subsequently, the resonance frequency shift value $\Delta$f0 of each of the sheet-like acoustic reinforcing composite materials was tested in accordance with Section 7.4 in the group standard "Porous Sound-Absorbing Particles for Microspeakers" (Standard Number: T/CECA 78-2022). The specific results are shown in Table 1 below.

Table 1. Acoustic performance data of the sheet-like acoustic reinforcing composite materials from Examples 1-8 and Comparative Examples 1-9

|  | Total weight of sheet-like material, 10 × 10 mm, mg | Dry mass of molecular sieve, % | Dry mass of molecular sieve, mg | Δf0, Hz |
|---|---|---|---|---|
| Example 1 | 50.0 | 80.0 | 40.0 | 49 |
| Example 2 | 50.0 | 60.0 | 30.0 | 40 |
| Example 3 | 50.0 | 35.5 | 17.75 | 27 |
| Example 4 | 50.0 | 14.0 | 7.0 | 16 |
| Example 5 | 50.0 | 18.62 | 9.31 | 20 |
| Example 6 | 50.0 | 80.0 | 40.0 | 50 |
| Example 7 | 50.0 | 60.0 | 30.0 | 38 |
| Example 8 | 50.0 | 35.5 | 17.75 | 26 |
| Comparative Example 1 | 50.0 | 85.0 | 42.5 | 38 |
| Comparative Example 2 | 50.0 | 9.0 | 4.5 | 8 |
| Comparative Example 3 | 50.0 | 80.0 | 40.0 | 40 |
| Comparative Example 4 | 50.0 | 18.62 | 9.31 | 13 |
| Comparative Example 5 | 50.0 | 60.0 | 30.0 | 38 |
| Comparative Example 6 | 50.0 | 80.0 | 40.0 | 50 |
| Comparative Example 7 | 50.0 | 60.0 | 30.0 | 38 |
| Comparative Example 8 | 50.0 | 80.0 | 40.0 | 40 |
| Comparative Example 9 | 50.0 | 80.0 | 40.0 | 39 |

After calculation, each of the sheet-like acoustic reinforcing composite materials obtained in Examples 1-8 and Comparative Examples 1-9 was cut into a size of 10 × 10 mm, and the dry mass of the molecular sieve in each sheet-like acoustic reinforcing composite material was as follows: 40.0 mg, 30.0 mg, 17.75 mg, 7.0 mg, 9.31 mg, 40.0 mg, 30.0 mg, 17.75 mg, 42.5 mg, 4.5 mg, 40.0 mg, 9.31 mg, 30.0 mg, 40.0 mg, 30.0 mg, 40.0 mg, 40.0 mg.

The acoustic efficiency of the sheet-like acoustic reinforcing composite material per unit mass was then calculated according to the equation below, and the obtained acoustic efficiency data are shown in Table 2 below.

Acoustic efficiency = Δf0 / (dry mass of molecular sieve); Unit: Hz/mg.

Table 2. Acoustic efficiency data of the sheet-like acoustic reinforcing composite materials from Examples 1-8 and Comparative Examples 1-9

|  | Acoustic efficiency, Hz/mg |
|---|---|
| Example 1 | 1.225 |
| Example 2 | 1.333 |
| Example 3 | 1.521 |
| Example 4 | 2.286 |
| Example 5 | 2.148 |
| Example 6 | 1.250 |
| Example 7 | 1.267 |
| Example 8 | 1.465 |
| Comparative Example 1 | 0.894 |

(continued)

| | Acoustic efficiency, Hz/mg |
| --- | --- |
| Comparative Example 2 | 1.778 |
| Comparative Example 3 | 1.000 |
| Comparative Example 4 | 1.396 |
| Comparative Example 5 | 1.267 |
| Comparative Example 6 | 1.250 |
| Comparative Example 7 | 1.267 |
| Comparative Example 8 | 1.000 |
| Comparative Example 9 | 0.975 |

It can be seen from the experimental data in Tables 1 and 2 that all of the sheet-like acoustic reinforcing composite materials provided in Examples 1-8 according to the present disclosure exhibit efficient acoustic performances.

It can also be seen from the experimental data in Tables 1 and 2 that, compared with Example 1 according to the present disclosure, which use only thick plant fibers as the fibrous material, Example 2 combines thick plant fibers and fine plant fibers as the fibrous material, Example 3 combines thick plant fibers, fine plant fibers and regenerated cellulose fibers as the fibrous material, and Example 4 combines thick plant fibers, fine plant fibers, regenerated cellulose fibers and chemically synthesized fibers as the fibrous material. The acoustic efficiency of the sheet-like acoustic reinforcing composite materials provided in Examples 2 to 4 increases sequentially, and is superior to that of the sheet-like acoustic reinforcing composite material provided in Example 1.

It can also be seen from the experimental data in Tables 1 and 2 that, in the sheet-like acoustic reinforcing composite material provided in Comparative Example 1, the dry mass of the molecular sieve is 85.0%, which is higher than the 80.0% of Example 1. However, its acoustic performance and acoustic efficiency are lower than those of Example 1. This is because that acoustic materials must have an abundant porous structure to fully exert their acoustic performances. In the sheet-like acoustic reinforcing composite materials, the fibrous material is interwoven to form a three-dimensional network structure, and the abundance of this structure determines the exertion of the acoustic performance. Since the dry mass of the molecular sieve in Comparative Example 1 is 85%, to ensure complete precipitation of the molecular sieve within the network structure of the fibrous material, the dry mass of the precipitation aid is 1%. Consequently, the dry mass of the fibrous material is 14.0%. Therefore, for the three-dimensional network structure of the sheet-like acoustic reinforcing composite material of Comparative Example 1, its porous structure is far less abundant than that of Example 1, and thus the acoustic performance of the molecular sieve cannot be fully exerted.

Likely, in the sheet-like acoustic reinforcing composite material provided in Comparative Example 2, the dry mass of the molecular sieve is 9%. Due to the low dry mass of the molecular sieve, the acoustic performance of the sheet-like acoustic reinforcing composite material is very limited and has no significance in practical application. Moreover, since the dry mass of the molecular sieve is low, while the amount of the precipitation aid is not reduced, this will also have a certain negative impact on the exertion of the acoustic performance of the molecular sieve. In conclusion, the acoustic performance and acoustic efficiency of the sheet-like acoustic reinforcing composite material provided in Comparative Example 2 are also significantly inferior to those of Example 4.

It can also be seen from the experimental data in Tables 1 and 2 that, compared with the sheet-like acoustic reinforcing composite material provided in Example 1 according to the present disclosure, the aspect ratio of the thick plant fibers in the sheet-like acoustic reinforcing composite material provided in Comparative Example 3 is only 7.5, that is, the thick plant fibers are too short. At this time, the three-dimensional network structure built thereby is not desirable, and the pores are insufficient. Consequently, the acoustic performance and acoustic efficiency of the sheet-like acoustic reinforcing composite material provided in Comparative Example 3 are also significantly inferior to those of Example 1, with a significant degradation in acoustic performance.

It can also be seen from the experimental data in Tables 1 and 2 that, compared with the sheet-like acoustic reinforcing composite material provided in Example 5 according to the present disclosure, the aspect ratio of the fine plant fibers in the sheet-like acoustic reinforcing composite material provided in Comparative Example 4 is as high as 510, that is, the fine plant fibers are too long. This leads to difficulty of dispersion and interweaving of fine plant fibers, resulting in uneven dispersion of fibers in the powder sheet and affecting the performance exertion of the powder sheet.

It can also be seen from the experimental data in Tables 1 and 2 that, compared with the sheet-like acoustic reinforcing composite material provided in Example 2 according to the present disclosure, the dry mass ratio of thick plant fibers to fine plant fibers in the sheet-like acoustic reinforcing composite material provided in Comparative Example 5 is not within the range of (100-30):(0-70). Due to the small width of the fine plant fibers, its specific surface area is larger than that of the coarse fibers, and the amount of porous powder particles precipitated on its surface may be much higher than that on the coarse fibers, leading to uneven distribution of porous powder particles in the sheet-like acoustic reinforcing composite material. Consequently, its acoustic performance is slightly inferior to that of Example 2.

It can also be seen from the experimental data in Tables 1 and 2 that the acoustic performance of the sheet-like acoustic reinforcing composite materials obtained in Example 6 and Comparative Example 6, and Example 7 and Comparative Example 7 are correspondingly the same, which indicates that the acoustic performance of the sheet-like acoustic reinforcing composite material is not affected by the use of hydrophilically modified chemically synthesized fibers.

It can also be seen from the experimental data in Tables 1 and 2 that the acoustic performance of the sheet-like acoustic reinforcing composite material provided in Comparative Example 8 is inferior to that of the sheet-like acoustic reinforcing composite material provided in Example 6. This is because that the aspect ratio of the hydrophilically modified chemically synthesized fibers is only 7.5, which is not within the range of 8-500, that is, the hydrophilically modified chemically synthesized fibers are too short. At this time, the three-dimensional network structure built thereby is not desirable, and the pores are insufficient. Consequently, the acoustic performance and acoustic efficiency of the sheet-like acoustic reinforcing composite material provided in Comparative Example 8 are significantly inferior to those of Example 6, with a significant degradation in acoustic performance.

It can also be seen from the experimental data in Tables 1 and 2 that the acoustic performance of the sheet-like acoustic reinforcing composite material provided in Comparative Example 9 is inferior to that of the sheet-like acoustic reinforcing composite material provided in Example 6. This is because that the aspect ratio of the hydrophilically modified chemically synthesized fibers is as high as 510, which is not within the range of 8-500, that is, the hydrophilically modified chemically synthesized fibers are too long, leading to interweaving of hydrophilically modified chemically synthesized fibers which are not easy to disperse, thus resulting in uneven dispersion of fibers in the powder sheet, affecting the performance exertion of the powder sheet. Consequently, the acoustic performance and acoustic efficiency of the sheet-like acoustic reinforcing composite material provided in Comparative Example 9 are significantly inferior to those of Example 6, with a significant degradation in acoustic performance.

Test Example 2

In this test example, each the sheet-like acoustic reinforcing composite materials provided in Examples 1-8 and Comparative Examples 1-9 as described above was cut into a size of 10 × 10 mm. Subsequently, the high-temperature and high-humidity storage $\Delta f'HTHR$ of each of the sheet-like acoustic reinforcing composite materials was tested in accordance with the technical contents specified in Section 7.8.4 in the group standard "Porous Sound-Absorbing Particles for Microspeakers" (Standard Number: T/CECA 78-2022). The specific results are shown in Table 3 below.

Table 3. High-temperature and high-humidity storage $\Delta f'HTHR$ test data of the sheet-like acoustic reinforcing composite materials provided in Examples 1-8 and Comparative Examples 1-9

|  | $\triangle f'HTHR$, Hz |
| --- | --- |
| Example 1 | 1 |
| Example 2 | 0 |
| Example 3 | -1 |
| Example 4 | 1 |
| Example 5 | 1 |
| Example 6 | 1 |
| Example 7 | 0 |
| Example 8 | -1 |
| Comparative Example 1 | 0 |
| Comparative Example 2 | 1 |
| Comparative Example 3 | -1 |
| Comparative Example 4 | -1 |
| Comparative Example 5 | 1 |
| Comparative Example 6 | -8 |
| Comparative Example 7 | -6 |

(continued)

|  | △f'HTHR, Hz |
|---|---|
| Comparative Example 8 | 0 |
| Comparative Example 9 | -1 |

It can be seen from Table 3 above that, compared with the corresponding comparative examples, the acoustic performances of the sheet-like acoustic reinforcing composite materials provided in Examples 1-5 according to the present disclosure are not decreased after high-temperature and high-humidity treatment, indicating that all of these sheet-like acoustic reinforcing composite materials have stable properties. In addition, the acoustic performances of the sheet-like acoustic reinforcing composite materials provided in Comparative Examples 1-5 are not decreased significantly after high-temperature and high-humidity treatment, indicating that all of these sheet-like acoustic reinforcing composite materials also have stable properties, but their acoustic performances (the acoustic performance in Table 1 and the acoustic efficiency in Table 2) are not as good as that of the corresponding examples. Furthermore, since maleic anhydride-modified polypropylene fibers are used in each of Comparative Example 8 and Comparative Example 9, the acoustic performances of the prepared sheet-like acoustic reinforcing composite materials are not decreased significantly after high-temperature and high-humidity treatment, indicating that all of these sheet-like acoustic reinforcing composite materials also have stable properties, but their acoustic performances (the acoustic performance in Table 1 and the acoustic efficiency in Table 2) are not as good as that of the corresponding examples.

It can also be seen from Table 3 above that the acoustic performances of the sheet-like acoustic reinforcing composite materials provided in Examples 6-8 according to the present disclosure have not been decreased after high-temperature and high-humidity treatment, indicating that all of these sheet-like acoustic reinforcing composite materials also have stable properties. However, the acoustic performances of the sheet-like acoustic reinforcing composite materials provided in Comparative Example 6 and Comparative Example 7 decrease significantly after high-temperature and high-humidity treatment, which fully illustrates that the hydrophilically modified synthetic fibers are of significance to the high-temperature and high-humidity storage △f'HTHR of the sheet-like acoustic reinforcing composite materials.

Test Example 3

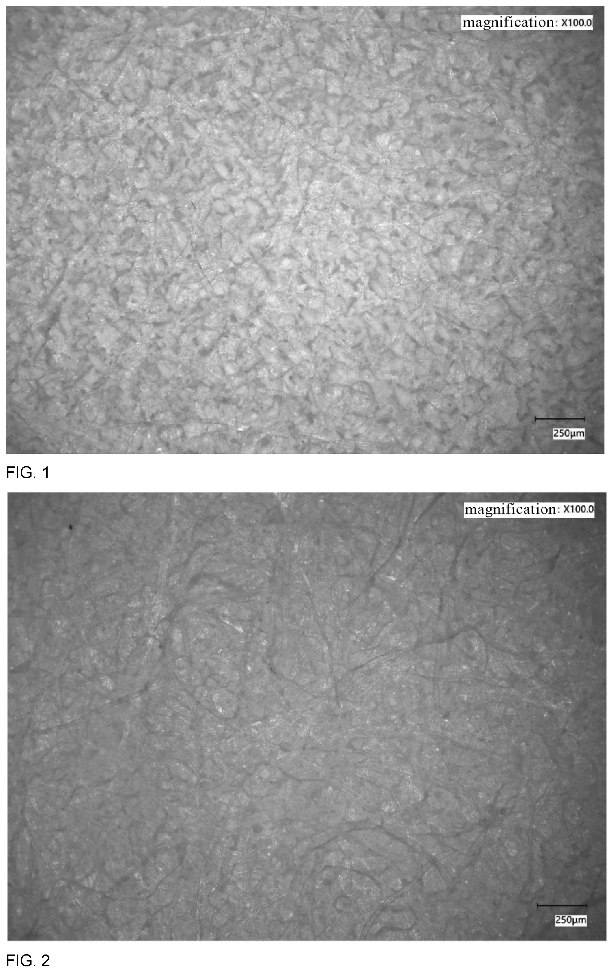

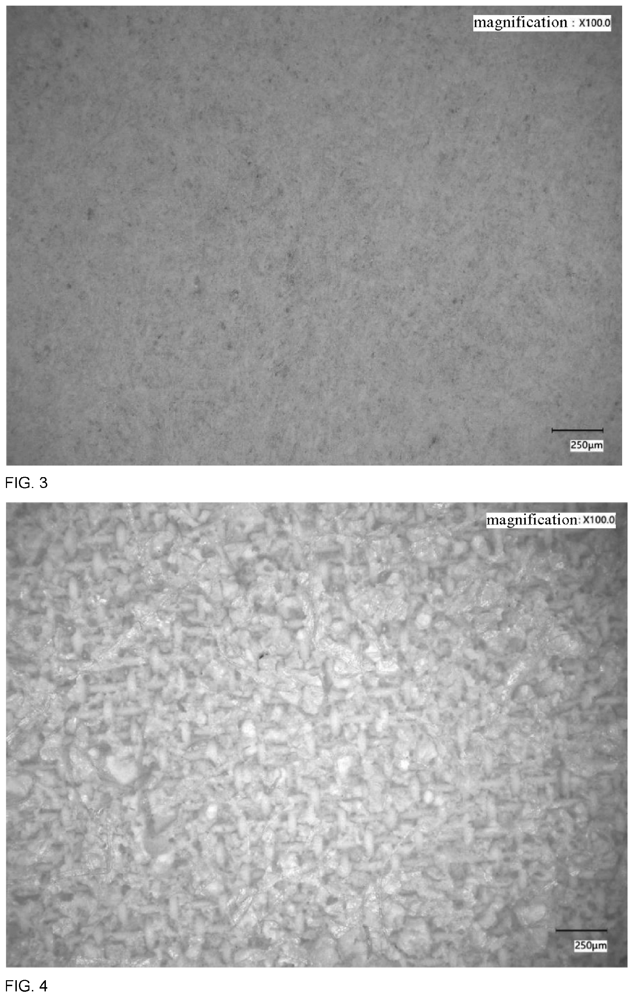

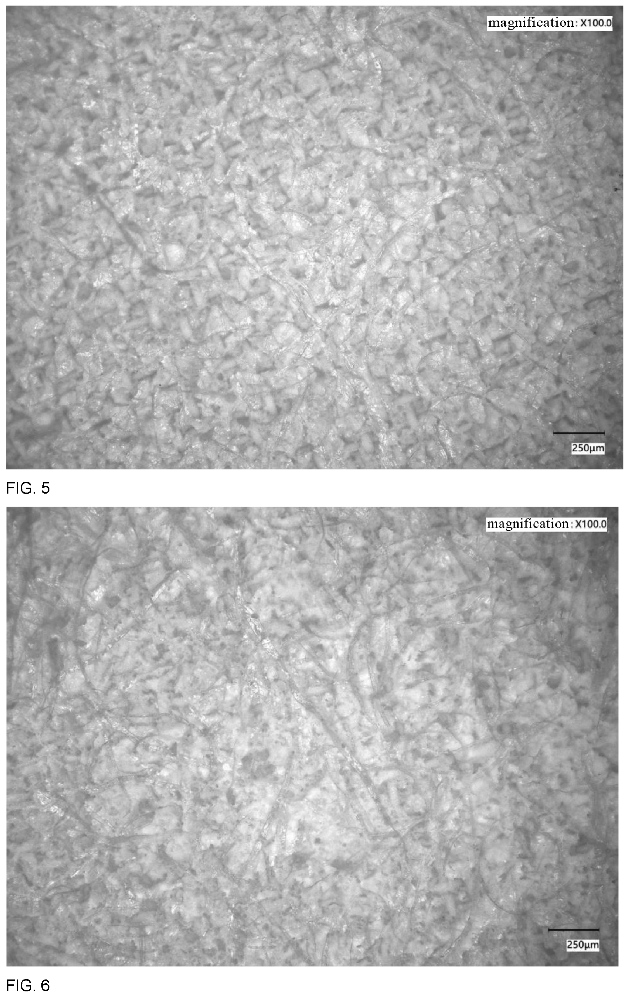

In this test example, the surface morphologies of the sheet-like acoustic reinforcing composite materials provided in Example 1, 3-4 and 6-8 according to the present disclosure were obtained using a high-definition digital microscope. The obtained experimental results are shown in Figs. 1-6, respectively. It is obvious from Figs. 1-6 that there are three-dimensional network structures formed by interweaving fibrous materials in the sheet-like acoustic reinforcing composite materials provided in the examples according to the present disclosure, and the particles of the powdery porous material are precipitated on the surface of the fibrous materials and in the three-dimensional network structures due to the precipitation aid. Moreover, it can also be seen from Figs. 1-6 that an abundant porous structure exists on the surface of the sheet-like acoustic reinforcing composite materials provided in the examples of the present disclosure. Moreover, the higher the dry mass of the powdery porous material particles in the sheet-like acoustic reinforcing composite material, the more pronounced the powdery porous material particles are observed to be attached to the three-dimensional network structure through the action of the precipitation aid.

Test Example 4

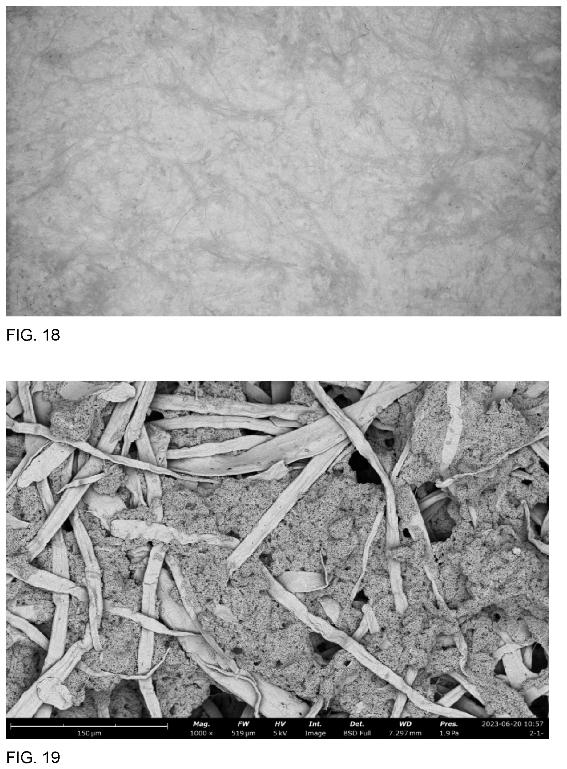

In this test example, SEM analysis was carried out on the sheet-like acoustic reinforcing composite materials provided in Examples 1-2 and 7 according to the present disclosure, respectively. The obtained SEM images are shown in Figs. 19, 7 and 20. It can be seen from Figs. 19, 7 and 20 that there are a large number of porous structures with high porosity in the sheet-like acoustic reinforcing composite materials provided in Examples 1-2 and 7, and these porous structures are the three-dimensional network structures formed by interweaving fibrous materials. It can be reasonably presumed that there are also a large number of porous structures with high porosity in the sheet-like acoustic reinforcing composite materials prepared in other examples according to the present disclosure.

Example 9

This example provides a sheet-like acoustic reinforcing composite material with a weight of 800 $g/m^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of plant fibers and composite chemical fibers, wherein the plant fibers were hydroxyl-containing softwood fibers with an average width of 45 μm and an aspect ratio of 70, having a dry mass of 14.55% and a moisture absorption rate of 29.5%.

The composite chemical fibers are composite chemical fibers having a sheath-core structure (Ningbo Dafchemical fibers Co., Ltd., Model: VF-450LM), including a core layer and a sheath layer coating the core layer. The core layer is ordinary polyester fibers (having a melting point of 250-265°C), and the sheath layer is modified polyester fibers (having a melting point of 110°e). The composite chemical fibers have a diameter of 50 μm and are cut to an aspect ratio of 40, with a dry mass of 5.0%.

The precipitation aid is starch with an average relative molecular weight of 550,000.

The powdery porous material is a ZSM-5 molecular sieve with an average particle size of 1.5 μm, comprising micropores having a pore size of 0.55 nm and mesopores having a pore size of 20 nm.

Based on 100% of the total weight of the sheet-like acoustic reinforcing composite material, the dry mass of the fibrous material is 19.55%, the dry mass of the powdery porous material is 80.0%, and the dry mass of the precipitation aid is 0.45%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

In the fibrous material dispersion, the dry mass concentration of the fibrous material was 2.0%. In the powdery porous material dispersion, the dry mass concentration of the powdery porous material was 20%. In the precipitation aid dispersion, the dry mass concentration of the precipitation aid is 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained.

Step 5: The sheet-like acoustic reinforcing composite material was placed in a forced-air drying oven and held at a temperature of 140°C for 8 minutes. This high-temperature treatment caused the sheath layer of the chemical fibers in the composite components to melt while the core layer was not, and the melted sheath layer then served as a bonding agent. Following the temperature-holding period, the sheet-like acoustic reinforcing composite material was cooled to room temperature, to obtain a high-strength and efficient sheet-like acoustic reinforcing composite material. The dry mass of the powdery porous material in the high-strength and efficient sheet-like acoustic reinforcement composite material was measured using the method described above and compared with the amount of powdery porous material specified in the formulation. The comparison results demonstrated consistency between the two values.

Example 10

This example provides a sheet-like acoustic reinforcing composite material with a weight of 800 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

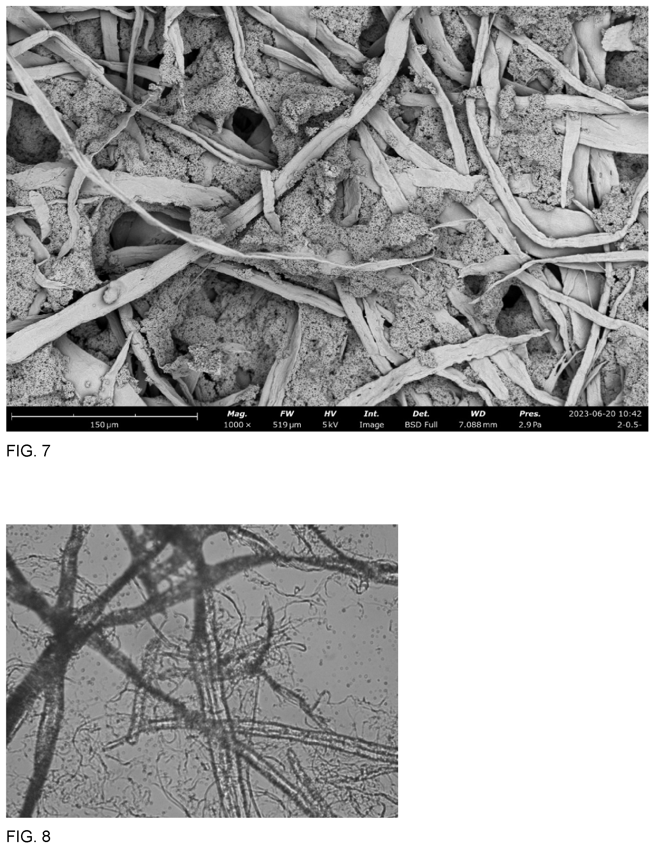

The fibrous material is composed of plant fibers and composite chemical fibers, wherein the plant fibers are hydroxyl-containing softwood fibers with an average width of 36 μm and an aspect ratio of 70, having a dry mass of 29.60% and a moisture absorption rate of 22.5%. The morphology of the hydroxyl-containing softwood fibers is shown in Fig. 8. It can be seen from Fig. 8 that the hydroxyl-containing softwood fibers used in this example has a large number of fine fibers on the surface.

The composite chemical fibers are composite chemical fibers having a sheath-core structure (Ningbo Dafchemical fibers Co., Ltd., Model: VF-450LM), including a core layer and a sheath layer coating the core layer. The core layer is ordinary polyester fibers (having a melting point of 250-265°C), and the sheath layer is modified polyester fibers (having a melting point of 110°C). The composite chemical fibers have a diameter of 50 μm and are cut to an aspect ratio of 40, with a dry mass of 5.0%.

The precipitation aid is polyacrylamide with a molecular weight of 15 million.

The powdery porous material is a ZSM-5 molecular sieve with an average particle size of 1.5 μm, comprising micropores having a pore size of 0.55 nm and mesopores having a pore size of 20 nm.

Based on 100% of the total weight of the sheet-like acoustic reinforcing composite material, the dry mass of the fibrous material is 39.60%, the dry mass of the powdery porous material is 60.0%, and the dry mass of the precipitation aid is 0.40%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

In the fibrous material dispersion, the dry mass concentration of the fibrous material was 2.0%. In the powdery porous material dispersion, the dry mass concentration of the powdery porous material was 20%. In the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained.

Step 5: The sheet-like acoustic reinforcing composite material was placed in a forced-air drying oven and held at a temperature of 140°C for 8 minutes. This high-temperature treatment caused the sheath layer of the chemical fibers in the composite components to melt while the core layer was not, and the melted sheath layer then served as a bonding agent. Following the temperature-holding period, the sheet-like acoustic reinforcing composite material was cooled to room temperature, to obtain a high-strength and efficient sheet-like acoustic reinforcing composite material. The dry mass of the powdery porous material in the high-strength and efficient sheet-like acoustic reinforcement composite material was measured using the method described above and compared with the amount of powdery porous material specified in the formulation. The comparison results demonstrated consistency between the two values.

Example 11

This example provides a sheet-like acoustic reinforcing composite material with a weight of 800 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of an organic fibrous material and an inorganic fibrous material, wherein the organic fibrous material is composed of plant fibers and composite chemical fibers. The plant fibers are hydroxyl-containing softwood fibers with an average width of 45 $\mu$m and an aspect ratio of 70, having a dry mass of 40% and a moisture absorption rate of 22.5%.

The composite chemical fibers are composite chemical fibers with a parallel structure, including high melting point fibers and low melting point fibers. The high melting point fibers are ordinary polyester fibers (having a melting point of 250-265°C), and the low melting point fibers are polyethylene fibers (having a melting point of 120°C). The composite chemical fibers have a diameter of 50 $\mu$m and are cut to an aspect ratio of 40, with a dry mass of 18.0%.

The inorganic fibrous material is glass fibers with an average diameter of 11 $\mu$m and an aspect ratio of 280, having a dry mass of 1.65%.

The precipitation aid is guar gum with an average relative molecular weight of 1.6 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 59.65%, the dry mass of the powdery porous material is 40.0%, and the dry mass of the precipitation aid is 0.35%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

In the fibrous material dispersion, the dry mass concentration of the fibrous material was 2.0%. In the powdery porous material dispersion, the dry mass concentration of the powdery porous material was 20%. In the precipitation aid dispersion, the dry mass concentration of the precipitation aid is 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained.

Step 5: The sheet-like acoustic reinforcing composite material was placed in a forced-air drying oven and held at a temperature of 140°C for 8 minutes. This high-temperature treatment caused the sheath layer of the chemical fibers in the composite components to melt while the core layer was not, and the melted sheath layer then served as a bonding agent. Following the temperature-holding period, the sheet-like acoustic reinforcing composite material was cooled to room temperature, to obtain a high-strength and efficient sheet-like acoustic reinforcing composite material. The dry mass of the powdery porous material in the high-strength and efficient sheet-like acoustic reinforcement composite material was measured using the method described above and compared with the amount of powdery porous material specified in the formulation. The comparison results demonstrated consistency between the two values.

Example 12

This example provides a sheet-like acoustic reinforcing composite material with a weight of 800 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

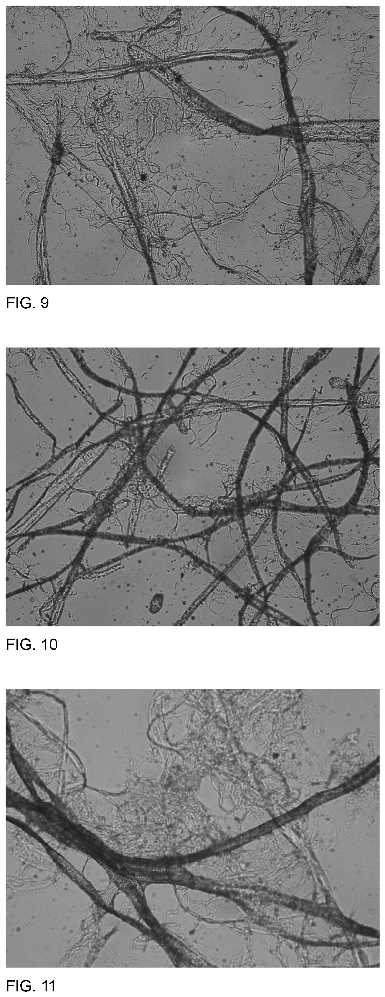

The fibrous material is composed of 100% of an organic fibrous material, wherein hydroxyl-containing softwood fibers with an average width of 45 $\mu$m and an aspect ratio of 70 have a dry mass of 21.55% and a moisture absorption rate of 29.5%, and hydroxyl-containing hardwood fibers with an average width of 17 $\mu$m and an aspect ratio of 65 have a dry mass of 8.0% and a moisture absorption rate of 27.5%. The morphologies of the softwood fibers and the hardwood fibers are shown in Fig. 9 and Fig. 10, respectively. It can be seen from Fig. 9 and Fig. 10 that the plant fibers used in this example have a large number of fine fibers on the surface.

The precipitation aid is polyacrylamide with a molecular weight of 15 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 29.55%, the dry mass of the powdery porous material is 70.0%, and the dry mass of the precipitation aid is 0.45%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

In the fibrous material dispersion, the dry mass concentration of the fibrous material was 2.0%. In the powdery porous material dispersion, the dry mass concentration of the powdery porous material was 20%. In the precipitation aid dispersion, the dry mass concentration of the precipitation aid is 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the high-strength and efficient sheet-like acoustic reinforcement composite material was measured using the method described above and compared with the amount of powdery porous material specified in the formulation. The comparison results demonstrated consistency between the two values.

Example 13

This example provides a sheet-like acoustic reinforcing composite material with a weight of 800 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

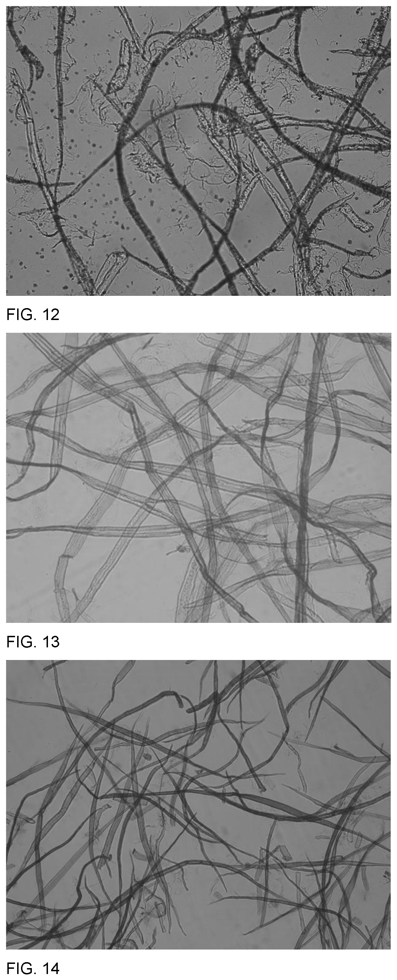

The fibrous material is composed of 100% of an organic fibrous material, wherein hydroxyl-containing softwood fibers with an average width of 45 $\mu$m and an aspect ratio of 70 have a dry mass of 29.60% and a moisture absorption rate of 22.5%, and hydroxyl-containing hardwood fibers with an average width of 17 $\mu$m and an aspect ratio of 65 have a dry mass of 10% and a moisture absorption rate of 25.5%. The morphologies of the softwood fibers and the hardwood fibers are shown in Fig. 11 and Fig. 12, respectively. It can be seen from Fig. 11 and Fig. 12 that the plant fibers used in this example have a large number of fine fibers on the surface.

The precipitation aid is polyacrylamide with a molecular weight of 15 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 39.60%, the dry mass of the powdery porous material is 60.0%, and the dry mass of the precipitation aid is 0.40%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

In the fibrous material dispersion, the dry mass concentration of the fibrous material was 2.0%. In the powdery porous material dispersion, the dry mass concentration of the powdery porous material was 20%. In the precipitation aid dispersion, the dry mass concentration of the precipitation aid is 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the high-strength and efficient sheet-like acoustic reinforcement composite material was measured using the method described above and compared with the amount of powdery porous material specified in the formulation. The comparison results demonstrated consistency between the two values.

Example 14

This example provides a sheet-like acoustic reinforcing composite material with a weight of 800 g/m², formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of an organic fibrous material and an inorganic fibrous material, wherein hydroxyl-containing softwood fibers with an average width of 45 $\mu$m and an aspect ratio of 70 have a dry mass of 30% and a moisture absorption rate of 22.5%, hydroxyl-containing hardwood fibers with an average width of 17 $\mu$m and an aspect ratio of 65 have a dry mass of 18% and a moisture absorption rate of 17.5%, and glass fibers with an average diameter of 11 $\mu$m and an aspect ratio of 280 have a dry mass of 1.65%.

The precipitation aid is polyacrylamide with a molecular weight of 15 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 49.65%, the dry mass of the powdery porous material is 50.0%, and the dry mass of the precipitation aid is 0.35%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

In the fibrous material dispersion, the dry mass concentration of the fibrous material was 2.0%. In the powdery porous material dispersion, the dry mass concentration of the powdery porous material was 20%. In the precipitation aid dispersion, the dry mass concentration of the precipitation aid is 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the high-strength and efficient sheet-like acoustic reinforcement composite material was measured using the method described above and compared with the amount of powdery porous material specified in the formulation. The comparison results demonstrated consistency between the two values.

Example 15

This example provides a sheet-like acoustic reinforcing composite material with a weight of 800 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of an inorganic fibrous material and composite chemical fibers, wherein the inorganic fibrous material is glass fibers with an average diameter of 11 μm and an aspect ratio of 280, having a dry mass of 14.55%.

The composite chemical fibers are composite chemical fibers having a sheath-core structure (Ningbo Dafchemical fibers Co., Ltd., Model: VF-450LM), including a core layer and a sheath layer coating the core layer. The core layer is ordinary polyester fibers (having a melting point of 250-265°C), and the sheath layer is modified polyester fibers (having a melting point of 110°C). The composite chemical fibers have a diameter of 50 μm and are cut to an aspect ratio of 40, with a dry mass of 10.0%.

The precipitation aid is polyacrylamide with a molecular weight of 15 million.

The powdery porous material is a ZSM-5 molecular sieve with an average particle size of 1.5 μm, comprising micropores having a pore size of 0.55 nm and mesopores having a pore size of 20 nm.

Based on 100% of the total weight of the sheet-like acoustic reinforcing composite material, the dry mass of the fibrous material is 19.55%, the dry mass of the powdery porous material is 80.0%, and the dry mass of the precipitation aid is 0.45%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

In the fibrous material dispersion, the dry mass concentration of the fibrous material was 2.0%. In the powdery porous material dispersion, the dry mass concentration of the powdery porous material was 20%. In the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained.

Step 5: The sheet-like acoustic reinforcing composite material was placed in a forced-air drying oven and held at a temperature of 140°C for 8 minutes. This high-temperature treatment caused the sheath layer of the chemical fibers in the composite components to melt while the core layer was not, and the melted sheath layer then served as a bonding agent. Following the temperature-holding period, the sheet-like acoustic reinforcing composite material was cooled to room temperature, to obtain a high-strength and efficient sheet-like acoustic reinforcing composite material. The dry mass of the powdery porous material in the high-strength and efficient sheet-like acoustic reinforcement composite material was measured using the method described above and compared with the amount of powdery porous material specified in the formulation. The comparison results demonstrated consistency between the two values.

Comparative Example 10

This comparative example provides acoustic reinforcing particles, which are commercially available conventional products with an average particle size of 420 μm.

Comparative Example 11

This comparative example provides a sheet-like acoustic reinforcing composite material, differing from Example 10 only in that:

The moisture absorption rate of the softwood fibers is 14.0%, and ordinary polyester fibers are used instead of the composite chemical fibers. The morphology of the softwood fibers is shown in Fig. 13. It can be seen from Fig. 13 that the softwood fibers with a moisture absorption rate of 14.0% used in this comparative example have very few fine fibers on the surface.

Comparative Example 12

This comparative example provides a sheet-like acoustic reinforcing composite material, differing from Example 10 only in that:

The moisture absorption rate of the softwood fibers is 14.0%.

Comparative Example 13

This comparative example provides a sheet-like acoustic reinforcing composite material, differing from Example 10 only in that:

Ordinary polyester fibers are used instead of the composite chemical fibers.

Comparative Example 14

This comparative example provides a sheet-like acoustic reinforcing composite material, differing from Example 13 only in that:

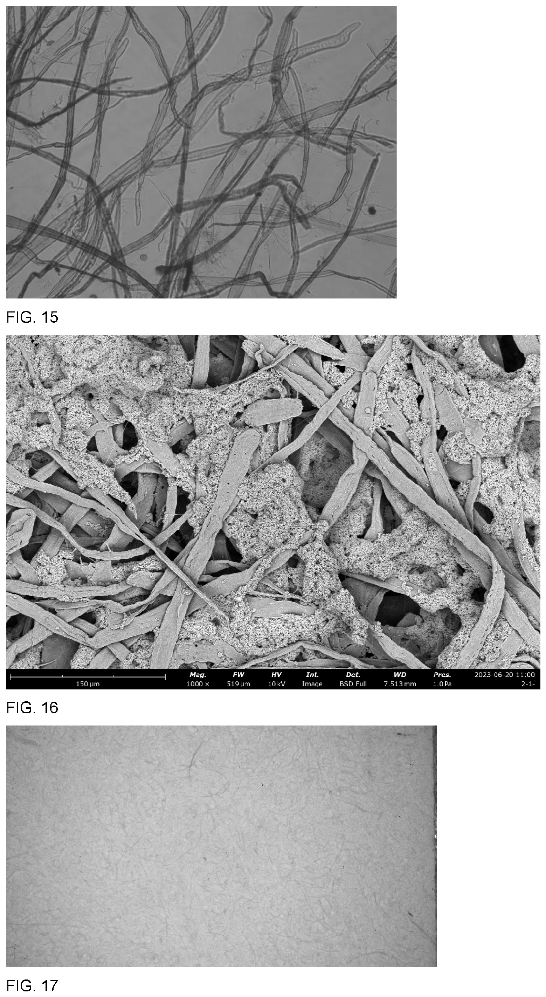

The moisture absorption rate of the softwood fibers is 14.0%, and the moisture absorption rate of the hardwood fibers is 15.0%. The morphologies of the softwood fibers and the hardwood fibers are shown in Fig. 14 and Fig. 15, respectively. It can be seen from Fig. 14 and Fig. 15 that the plant fibers used in this Comparative Example have very few fine fibers on the surface.

Comparative Example 15

This comparative example provides a sheet-like acoustic reinforcing composite material, differing from Example 13 only in that:

The moisture absorption rate of the softwood fibers is 32.0%, and the moisture absorption rate of the hardwood fibers are 33.0%.

Test Example 5

In this test example, SEM analysis was carried out on the sheet-like acoustic reinforcing composite materials provided in Examples 10 according to the present disclosure. The obtained SEM images are shown in Fig. 16. It can be seen from Figs. 16 that there are a large number of porous structures with high porosity in the sheet-like acoustic reinforcing composite materials provided in Examples 10, and these porous structures are the three-dimensional network structures formed by interweaving fibrous materials. It can be reasonably presumed that there are also a large number of porous structures with high porosity in the sheet-like acoustic reinforcing composite materials prepared in other examples according to the present disclosure.

Test Example 6

In this test example, each the sheet-like acoustic reinforcing composite materials provided in Examples 1-8 and Comparative Examples 1-9 as described above was cut into a size of 10 × 10 mm and then weighed. Subsequently, the resonance frequency shift value $\Delta f0$ of each of the sheet-like acoustic reinforcing composite materials was tested in accordance with Section 7.4 in the group standard "Porous Sound-Absorbing Particles for Microspeakers" (Standard Number: T/CECA 78-2022). The specific results are shown in Table 4 below.

Table 4. Acoustic performance data of the sheet-like acoustic reinforcing composite materials from Examples 9-15 and Comparative Examples 11-15

| | Total weight of sheet material, 10 × 10 mm, mg | Dry mass of molecular sieve, % | Dry mass of molecular sieve, mg | $\Delta f0$, Hz |
|---|---|---|---|---|
| Example 9 | 80.0 | 80.0 | 64.0 | 78 |
| Example 10 | 80.0 | 60.0 | 48.0 | 62 |
| Example 11 | 80.0 | 40.0 | 32.0 | 48 |
| Example 12 | 80.0 | 70.0 | 56.0 | 70 |
| Example 13 | 80.0 | 60.0 | 48.0 | 61 |

(continued)

|  | Total weight of sheet material, 10 × 10 mm, mg | Dry mass of molecular sieve, % | Dry mass of molecular sieve, mg | Δf0, Hz |
|---|---|---|---|---|
| Example 14 | 80.0 | 50.0 | 40.0 | 53 |
| Example 15 | 80.0 | 80.0 | 64.0 | 77 |
| Comparative Example 11 | 80.0 | 60.0 | 48.0 | 62 |
| Comparative Example 12 | 80.0 | 60.0 | 48.0 | 62 |
| Comparative Example 13 | 80.0 | 60.0 | 48.0 | 62 |
| Comparative Example 14 | 80.0 | 60.0 | 48.0 | 61 |
| Comparative Example 15 | 80.0 | 60.0 | 48.0 | 45 |

After calculation, each of the sheet-like acoustic reinforcing composite materials obtained in Examples 9-15 and Comparative Examples 11-15 was cut into a size of 10 × 10 mm, and the dry mass of the molecular sieve in each sheet-like acoustic reinforcing composite material was as follows: 64.0 mg, 48.0 mg, 32.0mg, 56.0 mg, 48.0 mg, 40.0mg, 64.0mg, 48.0 mg, 48.0 mg, 48.0 mg, 48.0 mg, 48.0 mg.

The acoustic efficiency of the sheet-like acoustic reinforcing composite material per unit mass was then calculated according to the equation below, and the obtained acoustic efficiency data are shown in Table 5 below.

Acoustic efficiency = Δf0 / (dry mass of molecular sieve); Unit: Hz/mg.

Table 5. Acoustic efficiency data of the sheet-like acoustic reinforcing composite materials from Examples 9-15 and Comparative Examples 11-15

|  | Acoustic efficiency, Hz/mg |
|---|---|
| Example 9 | 1.219 |
| Example 10 | 1.292 |
| Example 11 | 1.500 |
| Example 12 | 1.250 |
| Example 13 | 1.271 |
| Example 14 | 1.325 |
| Example 15 | 1.203 |
| Comparative Example 11 | 1.292 |
| Comparative Example 12 | 1.292 |
| Comparative Example 13 | 1.292 |
| Comparative Example 14 | 1.271 |
| Comparative Example 15 | 0.938 |

It can be seen from the experimental data in Tables 4 and 5 that all of the sheet-like acoustic reinforcing composite materials provided in Examples 9-15 according to the present disclosure have efficient acoustic performances.

In this test example, 64.0 mg, 56.0 mg, 48.0 mg, 40.0 mg and 32.0 mg of the acoustic reinforcing particles provided in Comparative Example 10 were also accurately weighed, respectively, and the resonance frequency shift values Δf0 of the acoustic reinforcing particles were tested in accordance with Section 7.4 in the group standard "Porous Sound-Absorbing Particles for Microspeakers" (Standard Number: T/CECA 78-2022). The specific results are shown in Table 6 below.

Table 6. Acoustic performance and acoustic efficiency data of commercially available conventional acoustic reinforcing particles

| Mass, mg | Δf0 Hz | Acoustic efficiency, Hz/mg |
|---|---|---|
| 64.0 | 72 | 1.125 |

(continued)

| Mass, mg | Δf0 Hz | Acoustic efficiency, Hz/mg |
|---|---|---|
| 56.0 | 67 | 1.196 |
| 48.0 | 58 | 1.208 |
| 40.0 | 46 | 1.150 |
| 32.0 | 43 | 1.344 |

It can be seen from the comparison of the experimental data in Tables 4, 5 and 6 that the acoustic performances of the sheet-like acoustic reinforcing composite materials provided in Examples 9-15 according to the present disclosure are significantly superior to that of the commercially available conventional acoustic reinforcing particles.

It can also be seen from the comparison of the experimental data in Tables 4, 5 and 6 that, compared with Example 10 according to the present disclosure, the acoustic performances of the sheet-like acoustic reinforcing composite materials provided in Comparative Example 11, Comparative Example 12 and Comparative Example 13 are the same. This is mainly because that the addition of either composite chemical fibers or ordinary polyester fibers has no substantial effect on the acoustic performance of the sheet-like acoustic reinforcing composite materials. The main difference between the sheet-like acoustic reinforcing composite materials provided in these Examples and Comparative Examples is that the sheet-like acoustic reinforcing composite material provided in Example 10 according to the present disclosure has a higher internal bonding strength, whereas the internal bonding strengths of the sheet-like acoustic reinforcing composite materials provided in Comparative Example 11, Comparative Example 12 and Comparative Example 13 are far inferior to that of Example 10. For specific details, please refer to Table 7 and the relevant explanations therefor.

For the sheet-like acoustic reinforcing composite materials provided in Example 10 and Example 13 according to the present disclosure, the dry mass of the molecular sieve is identical at 60.0%. However, the acoustic performance of the sheet-like acoustic reinforcing composite material provided in Example 10 is slightly superior to that of Example 13. This is because that the composite chemical fibers with a core-sheath structure having a dry mass of 10.0% were added in Example 10.

For the sheet-like acoustic reinforcing composite materials provided in Example 9 and Example 15 according to the present disclosure, the dry mass of the molecular sieve is identical at 80%. However, the acoustic performance of the sheet-like acoustic reinforcing composite material provided in Example 9 is slightly superior to that of Example 15. This is because that the softwood fibers with a dry mass of 14.55% were added in Example 9, while the glass fibers with a dry mass of 14.55% were added in Example 15. It is widely known that the density of glass fibers is much higher than that of softwood fibers. Therefore, the density of the sheet-like acoustic reinforcing composite material obtained in Example 15 is also higher than that of the sheet-like acoustic reinforcing composite material obtained in Example 9. Accordingly, its acoustic performances are slightly inferior to that of the sheet-like acoustic reinforcing composite material provided in Example 9.

For the sheet-like acoustic reinforcing composite materials provided in Example 13 and Comparative Example 14 according to the present disclosure, the dry mass of the molecular sieve is identical at 60%. Although the moisture absorption rate of the softwood fibers used in Comparative Example 14 is only 14.0% and the moisture absorption rate of the hardwood fibers used in Comparative Example 14 is only 15.0%, the acoustic performance of the sheet-like acoustic reinforcing composite material provided in Comparative Example 14 is substantially the same as that of the sheet-like acoustic reinforcing composite material provided in Example 13. This is because that when the moisture absorption rate of the fibrous materials is lower, their specific surface area is also small, which primarily restricts the bonding of the powdery porous materials to the fibrous materials, thereby reducing the strength of the sheet-like acoustic reinforcing composite materials (as shown by the experimental data in Test Example 7 below). However, it has a small impact on the acoustic performances of the sheet-like acoustic reinforcing composite materials.

For the sheet-like acoustic reinforcing composite materials provided in Example 13 and Comparative Example 15 according to the present disclosure, the dry mass of the molecular sieve is identical at 60%. However, since the moisture absorption rate of the softwood fibers used in Comparative Example 15 is 32.0% and the moisture absorption rate of the hardwood fibers used in Comparative Example 15 is 33.0%, the bonding area between the fibrous materials used in Comparative Example 15 is too large, resulting in insufficient porosity of the sheet-like acoustic reinforcing composite material. This makes the acoustic performance far inferior to that of the sheet-like acoustic reinforcing composite material provided in Example 13.

Test Example 7

In this test example, each of the sheet-like acoustic reinforcing composite materials provided in Example 10 and Comparative Example 11 as well as Example 13 and Comparative Example 14 was first cut into a square with a size of 10 × 10 mm and then adhered to the inner wall of a metal test fixture with a mass of 220 g by double-sided tape. Subsequently, the height of the automatic drop test machine was adjusted to 180 cm, and the metal test fixture attached with the sheet-like acoustic reinforcing composite materials was automatically dropped onto a marble floor from a height of 180 cm. Each of the six surfaces of the metal test fixture was subjected to 6 drop tests, and thus a total of 36 drop tests were performed.

After 36 drop tests, the sheet-like acoustic reinforcing composite materials provided in Example 10 and Example 13 according to the present disclosure remained fully adhered to the inner wall of the test fixture. Fig. 17 is an image of the sheet-like acoustic reinforcing composite material provided in Example 13 of the present disclosure after dropping (an image after delamination), indicating that the sheet-like acoustic reinforcing composite material is intact with no separation.

After 36 drop tests, internal separation occurred in the sheet-like acoustic reinforcing composite materials provided in Comparative Example 11 and Comparative Example 14. Portions adhered to the inner wall of the test fixture, exposing the internal fibrous materials and powdery porous materials. Fig. 18 is an image of the sheet-like acoustic reinforcing composite material provided in Comparative Example 14 after delamination. The image shows the internal separation of the sheet-like acoustic reinforcing composite material, indicating insufficient internal bonding strength of the sheet-like acoustic reinforcing composite material.

From the comparison of the drop test results of the sheet-like acoustic reinforcing composite materials provided in Example 10 according to the present disclosure and Comparative Example 11, as well as Example 13 according to the present disclosure and Comparative Example 14, it can be seen that controlling the moisture absorption rate of the organic fibrous materials in the sheet-like acoustic reinforcing composite material within the specific range of 16.0-31.5% and using composite chemical fibers can significantly improve the strength of the sheet-like acoustic reinforcing composite material and ensure the long-term stable operation of the sheet-like acoustic reinforcing composite material in the loudspeaker cavity.

Test Example 8

In this test example, each of the sheet-like acoustic reinforcing composite materials provided in Example 10 and Comparative Examples 11-13 was first cut into a square with a size of 10 × 10 mm and then adhered to the inner wall of a metal test fixture with a mass of 220 g by double-sided tape. Subsequently, the height of the automatic drop test machine was adjusted to 180 cm, and the metal test fixture attached with the sheet-like acoustic reinforcing composite materials was automatically dropped onto a marble floor from a height of 180 cm. Each of the six surfaces of the metal test fixture was dropped for the same number of times until separation occurred for all the sheet-like acoustic reinforcing composite materials. The total number of drops at which separation occurred in the sheet-like acoustic reinforcing composite materials provided in Example 10 and Comparative Example 11 and 13 is shown in Table 7 below.

Table 7. Total number of drops at which separation occurred in the sheet-like acoustic reinforcing composite materials of Example 10 and Comparative Example 11 and 13

|  | Total number of drops |
| --- | --- |
| Example 10 | 120 |
| Comparative Example 11 | 6 |
| Comparative Example 12 | 48 |
| Comparative Example 13 | 72 |

It can be seen from Table 7 that the sheet-like acoustic reinforcing composite material provided in Example 10 was not completely separated until the total number of drops reached 120. Compared with Example 10, the moisture absorption rate of the softwood fibers used in Comparative 3 was unqualified, and ordinary polyester fibers were used in Comparative Example 13 instead of composite chemical fibers. Although the total number of drops corresponding to the complete separation of the sheet-like acoustic reinforcing composite materials provided in Comparative Example 12 and 13 was relatively high, it was significantly lower than that corresponding to Example 10. For Comparative Example 11, the moisture absorption rate of the softwood fibers used was unqualified, and ordinary polyester fibers were used instead of composite chemical fibers. The total number of drops corresponding to the complete separation of the sheet-like acoustic reinforcing composite material provided in the Comparative Example 11 was only 6, which was significantly lower than that of Comparative Example 12-13 and Example 10.

The above experimental results also show that controlling the moisture absorption rate of the organic fibrous materials in the sheet-like acoustic reinforcing composite material within the specific range of 16.0-31.5% and using composite chemical fibers can significantly improve the strength of the sheet-like acoustic reinforcing composite material and ensure the long-term stable operation of the sheet-like acoustic reinforcing composite material in the loudspeaker cavity.

In conclusion, the acoustic reinforcing composite materials provided in Examples 9-15 according to the present disclosure have efficient acoustic performances and high strength. After drop testing, the surface of each acoustic reinforcing composite material does not shed powder, and it is firmly bonded to the double-sided tape, without internal separation phenomena of the acoustic reinforcing composite material. This is an important condition to ensure the long-term stable operation of the acoustic reinforcing composite material in the loudspeaker cavity.

Comparative Example 16

This comparative example provides a sheet-like acoustic reinforcing composite material, differing from Example 1 only in that:
Based on 100% of the total weight of the sheet-like acoustic reinforcing composite material, the dry mass of the hydrophilic fibers is 18%, the dry mass of the powdery porous material is 81%, and the dry mass of the precipitation aid is 1%.

Comparative Example 17

This Comparative example provides a sheet-like acoustic reinforcing composite material, differing from Example 2 only in that:
The hydrophilic fibers are composed of thick plant fibers and fine plant fibers, wherein the dry mass of the thick plant fibers is 65.03% and the dry mass of the fine plant fibers is 21.97%. The dry mass ratio of the thick plant fibers to the fine plant fibers in the hydrophilic fibers is 74.7:25.3.
Based on 100% of the total weight of the sheet-like acoustic reinforcing composite material, the dry mass of the hydrophilic fibers is 87%, the dry mass of the powdery porous material is 12.4%, and the dry mass of the precipitation aid is 0.6%.

Test Example 9

In this test example, each the sheet-like acoustic reinforcing composite materials provided in Examples 1-5 and Comparative Examples 3-5 and 16-17 as described above was cut into a size of 10 × 10 mm and then weighed. Subsequently, the resonance frequency shift value $\Delta f0$ of each of the sheet-like acoustic reinforcing composite materials was tested in accordance with Section 7.4 in the group standard "Porous Sound-Absorbing Particles for Microspeakers" (Standard Number: T/CECA 78-2022). The specific results are shown in Table 8 below.

Table 8. Acoustic performance data of the sheet-like acoustic reinforcing composite materials from Examples 1-5 and Comparative Examples 3-5 and 16-17

|  | Total weight of | Dry mass of | Dry mass of | $\Delta f0$, |
|---|---|---|---|---|
|  | sheet material, 10 × 10 mm, mg | molecular sieve, % | molecular sieve, mg | Hz |
| Example 1 | 50.0 | 80.0 | 40.0 | 49 |
| Example 2 | 50.0 | 60.0 | 30.0 | 40 |
| Example 3 | 50.0 | 35.5 | 17.75 | 27 |
| Example 4 | 50.0 | 14.0 | 7.0 | 16 |
| Example 5 | 50.0 | 18.62 | 9.31 | 20 |
| Comparative Example 16 | 50.0 | 81 | 40.5 | 45 |
| Comparative Example 17 | 50.0 | 12.4 | 6.2 | 9 |
| Comparative Example 3 | 50.0 | 80.0 | 40.0 | 40 |
| Comparative Example 4 | 50.0 | 18.62 | 9.31 | 13 |
| Comparative Example 5 | 50.0 | 60.0 | 30.0 | 38 |

After calculation, each of the sheet-like acoustic reinforcing composite materials obtained in Examples 1-5 and Comparative Examples 3-5 and 16-17 was cut into a size of 10 × 10 mm, and the dry mass of the molecular sieve in each sheet-like acoustic reinforcing composite material was as follows: 40.0 mg, 30.0 mg, 17.75 mg, 7.0mg, 9.31mg, 40.5mg, 6.2mg, 40.0mg, 9.31mg, 30.0 mg.

The acoustic efficiency of the sheet-like acoustic reinforcing composite material per unit mass was then calculated according to the equation below, and the obtained acoustic efficiency data are shown in Table 9 below.

Acoustic efficiency = Δf0 / (dry mass of molecular sieve); Unit: Hz/mg.

Table 9. Acoustic efficiency data of the sheet-like acoustic reinforcing composite materials from Examples 1-5 and Comparative Examples 3-5 and 16-17

|  | Acoustic efficiency, Hz/mg |
| --- | --- |
| Example 1 | 1.225 |
| Example 2 | 1.333 |
| Example 3 | 1.521 |
| Example 4 | 2.286 |
| Example 5 | 2.148 |
| Comparative Example 16 | 1.111 |
| Comparative Example 17 | 1.451 |
| Comparative Example 3 | 1.000 |
| Comparative Example 4 | 1.396 |
| Comparative Example 5 | 1.267 |

It can be seen from the experimental data in Tables 8 and 9 that all of the sheet-like acoustic reinforcing composite materials provided in Examples 1-5 according to the present disclosure have efficient acoustic performances.

It can also be seen from the experimental data in Tables 8 and 9 that, compared with Example 1 according to the present disclosure, which use only thick plant fibers as the fibrous material, Example 2 combines thick plant fibers and fine plant fibers as the fibrous material, Example 3 combines thick plant fibers, fine plant fibers and regenerated cellulose fibers as the fibrous material, and Example 4 combines thick plant fibers, fine plant fibers, regenerated cellulose fibers and chemically synthesized fibers as the fibrous material. The acoustic efficiency of the sheet-like acoustic reinforcing composite materials provided in Examples 2 to 4 increases sequentially, and is superior to that of the sheet-like acoustic reinforcing composite material provided in Example 1.

It can also be seen from the experimental data in Tables 8 and 9 that, compared with the sheet-like acoustic reinforcing composite material provided in Example 1 according to the present disclosure, the dry mass of the powdery porous material in the sheet-like acoustic reinforcing composite material provided in Comparative Example 16 is relatively high, which results in insufficient three-dimensional network structure built by the hydrophilic fibers and insufficient pores, and thus the acoustic performance is significant decreased.

It can also be seen from the experimental data in Tables 8 and 9 that, compared with the sheet-like acoustic reinforcing composite material provided in Example 2 according to the present disclosure, the dry mass of the powdery porous material in the sheet-like acoustic reinforcing composite material provided in Comparative Example 17 is relatively low. Due to the low dry mass of the molecular sieve, the acoustic performance of the sheet-like acoustic reinforcing composite material is very limited and has no significance in practical application. Moreover, since the dry mass of the molecular sieve is low, while the amount of the precipitation aid is not reduced, this will also have a certain negative impact on the exertion of the acoustic performance of the molecular sieve. In conclusion, the acoustic performance and acoustic efficiency of the sheet-like acoustic reinforcing composite material provided in Comparative Example 17 are also significantly inferior to those of Example 2.

It can also be seen from the experimental data in Tables 8 and 9 that, compared with the sheet-like acoustic reinforcing composite material provided in Example 1 according to the present disclosure, the aspect ratio of the thick plant fibers in the sheet-like acoustic reinforcing composite material provided in Comparative Example 3 is only 7.5, that is, the thick plant fibers are too short. At this time, the three-dimensional network structure built thereby is not desirable, and the pores are insufficient. Consequently, the acoustic performance and acoustic efficiency of the sheet-like acoustic reinforcing composite material provided in Comparative Example 3 are also significantly inferior to those of Example 1, with a significant degradation in acoustic performance.

It can also be seen from the experimental data in Tables 8 and 9 that, compared with the sheet-like acoustic reinforcing composite material provided in Example 5 according to the present disclosure, the aspect ratio of the fine plant fibers in the sheet-like acoustic reinforcing composite material provided in Comparative Example 4 is as high as 510, that is, the fine plant fibers are too long. This leads to difficulty of dispersion and interweaving of fine plant fibers, resulting in uneven dispersion of fibers in the powder sheet and affecting the performance exertion of the powder sheet.

It can also be seen from the experimental data in Tables 8 and 9 that, compared with the sheet-like acoustic reinforcing composite material provided in Example 2 according to the present disclosure, the dry mass ratio of thick plant fibers to fine plant fibers in the sheet-like acoustic reinforcing composite material provided in Comparative Example 5 is not within the range of (100-30):(0-70), which results in that the acoustic performance of the sheet-like acoustic reinforcing composite material provided in Comparative Example 5 is slightly inferior to that of the sheet-like acoustic reinforcing composite material provided in Example 2. This is because that thick plant fibers and fine plant fibers are interlaced to build a three-dimensional network structure. When the ratio between these two is not within the above range, due to the small width of the fine plant fibers, its specific surface area is larger than that of the coarse fibers, and the amount of porous powder particles precipitated on its surface may be much higher than that on the coarse fibers, leading to uneven distribution of porous powder particles in the sheet-like acoustic reinforcing composite material. Consequently, its acoustic performance is slightly inferior to that of Example 2.

Test Example 10

In this test example, each the sheet-like acoustic reinforcing composite materials provided in Examples 1-5 and Comparative Examples 3-5 and 16-17 as described above was cut into a size of 10 × 10 mm. Subsequently, the high-temperature and high-humidity storage $\Delta f'HTHR$ of each of the sheet-like acoustic reinforcing composite materials was tested in accordance with the technical contents specified in Section 7.8.4 in the group standard "Porous Sound-Absorbing Particles for Microspeakers" (Standard Number: T/CECA 78-2022). The specific results are shown in Table 10 below.

Table 10. High-temperature and high-humidity storage $\Delta f'HTHR$ test data of the sheet-like acoustic reinforcing composite materials provided in Examples 1-5 and Comparative Examples 3-5 and 16-17

|  | $\triangle f'HTHR$, Hz |
|---|---|
| Example 1 | 1 |
| Example 2 | 0 |
| Example 3 | -1 |
| Example 4 | 1 |
| Example 5 | 1 |
| Comparative Example 16 | 0 |
| Comparative Example 17 | 1 |
| Comparative Example 3 | -1 |
| Comparative Example 4 | -1 |
| Comparative Example 5 | 1 |

It can be seen from Table 10 above that, compared with the comparative examples, the acoustic performances of the sheet-like acoustic reinforcing composite materials provided in Examples 1-5 according to the present disclosure are not decreased after high-temperature and high-humidity treatment, indicating that all of these sheet-like acoustic reinforcing composite materials have stable properties. In addition, the acoustic performances of the sheet-like acoustic reinforcing composite materials provided in Comparative Examples 3-5 and 16-17 are not decreased significantly after high-temperature and high-humidity treatment, indicating that all of these sheet-like acoustic reinforcing composite materials also have stable properties, but their acoustic performances (the acoustic performance in Table 8 and the acoustic efficiency in Table 9) are not as good as that of the corresponding examples.

Example 16

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of hydrophilically modified chemically synthesized fibers and softwood fibers, wherein the hydrophilically modified chemically synthesized fibers are maleic anhydride-modified polyester fibers with an average width of 30 $\mu$m and an aspect ratio of 80, having a dry mass of 2.00%; the softwood fibers are hydroxyl-containing softwood fibers with an average width of 45 $\mu$m and an aspect ratio of 70 (which are thick plant fibers), having a dry mass of 17.50%.

The dry mass ratio of the hydrophilically modified chemically synthesized fibers to the softwood fibers is 10.3:89.7.

The precipitation aid is polyacrylamide with a molecular weight of 15 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 19.50%, the dry mass of the powdery porous material is 80.0%, and the dry mass of the precipitation aid is 0.5%.

**In** this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 17

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of hydrophilically modified chemically synthesized fibers, softwood fibers and hardwood fibers, wherein the hydrophilically modified chemically synthesized fibers are maleic anhydride-modified polypropylene fibers with an average width of 45 $\mu$m and an aspect ratio of 70, having a dry mass of 3.00%; the softwood fibers are hydroxyl-containing softwood fibers with an average width of 45 $\mu$m and an aspect ratio of 70 (which are thick plant fibers), having a dry mass of 28.60%; the hardwood fibers are hydroxyl-containing hardwood fibers with an average width of 17 $\mu$m and an aspect ratio of 65 (which are fine plant fibers), having a dry mass of 8.0%.

The dry mass ratio of the hydrophilically modified chemically synthesized fibers to the plant fibers are 7.58:92.42.

The precipitation aid is starch with an average relative molecular weight of 550,000.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 39.60%, the dry mass of the powdery porous material is 60.0%, and the dry mass of the precipitation aid is 0.4%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 18

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of hydrophilically modified chemically synthesized fibers and hardwood fibers, wherein the hydrophilically modified chemically synthesized fibers are maleic anhydride-modified polypropylene fibers with an average width of 45 $\mu$m and an aspect ratio of 70, having a dry mass of 12.00%; the hardwood fibers are hydroxyl-containing hardwood fibers with an average width of 17 $\mu$m and an aspect ratio of 65 (which are fine plant fibers), having a dry mass of 52.25%.

The dry mass ratio of the hydrophilically modified chemically synthesized fibers to the hardwood fibers is 18.7:81.3.

The precipitation aid is guar gum with an average relative molecular weight of 1.6 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 64.25%, the dry mass of the powdery porous material is 35.5%, and the dry mass of the precipitation aid is 0.25%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Example 19

This example provides a sheet-like acoustic reinforcing composite material with a weight of 500 g/m$^2$, formed by interweaving a fibrous material. The sheet-like acoustic reinforcing composite material has a three-dimensional network structure inside, and wherein a powdery porous material is attached to the surface of the fibrous material by means of a precipitation aid.

The fibrous material is composed of hydrophilically modified chemically synthesized fibers and softwood fibers, wherein the hydrophilically modified chemically synthesized fibers are maleic anhydride-modified polyester fibers with an average width of 30 $\mu$m and an aspect ratio of 80, having a dry mass of 0.39%; the softwood fibers are hydroxyl-containing softwood fibers with an average width of 45 $\mu$m and an aspect ratio of 70 (which are thick plant fibers), having a dry mass of 19.11%.

The dry mass ratio of the hydrophilically modified chemically synthesized fibers to the softwood fibers is 2.0:98.0.

The precipitation aid is polyacrylamide with a molecular weight of 15 million.

The powdery porous material is a ZSM-5 molecular sieve with an average particle size of 1.5 $\mu$m, comprising micropores having a pore size of 0.55 nm and mesopores having a pore size of 20 nm.

Based on 100% of the total weight of the sheet-like acoustic reinforcing composite material, the dry mass of the fibrous material is 64.25%, the dry mass of the powdery porous material is 35.5%, and the dry mass of the precipitation aid is 0.25%.

In this example, the sheet-like acoustic reinforcing composite material was prepared by a method comprising the following specific steps.

Step 1: According to the above formulation, the fibrous material, the powdery porous material, and the precipitation aid were separately dispersed in water to obtain a fibrous material dispersion, a powdery porous material dispersion, and a precipitation aid dispersion.

Based on 100% of the total weight of the fibrous material dispersion, the dry mass concentration of the fibrous material was 2.0%. Based on 100% of the total weight of the powdery porous material dispersion, the dry mass concentration of the powdery porous material was 20%. Based on 100% of the total weight of the precipitation aid dispersion, the dry mass concentration of the precipitation aid was 0.02%.

Step 2: Under stirring conditions, the powdery porous material dispersion was added to the fibrous material dispersion and mixed uniformly. The precipitation aid dispersion was then added and mixed uniformly to interweave the fibrous material while simultaneously precipitating the powdery porous material onto the surface of the fibrous material.

Step 3: The mixed liquid obtained in Step 2 was filtered to obtain a sheet material with a water content of 70 wt%.

Step 4: The sheet material was subjected to forced-air drying at 110°C for 120 minutes. Upon completion of drying, a sheet-like acoustic reinforcement composite material was obtained. The dry mass of the powdery porous material in the sheet-like acoustic reinforcement composite material was measured using the method described above and compared with the amount of powdery porous material specified in the formulation. The comparison results demonstrated consistency between the two values.

Comparative Example 18

This comparative example provides a sheet-like acoustic reinforcing composite material, differing from Example 16 only in that:

The fibrous material is only composed of softwood fibers. The softwood fibers are hydroxyl-containing softwood fibers with an average width of 45 $\mu$m and an aspect ratio of 70 (which are thick plant fibers), having a dry mass of 19.50%.

Comparative Example 19

This comparative example provides a sheet-like acoustic reinforcing composite material, differing from Example 17 only in that:

The fibrous material is composed of original chemically synthesized fibers without hydrophilic modification, softwood fibers and hardwood fibers. The original chemically synthesized fibers without hydrophilic modification is polypropylene fibers with an average width of 45 $\mu$m and an aspect ratio of 70, having a dry mass of 3.00%. The softwood fibers are hydroxyl-containing softwood fibers with an average width of 45 $\mu$m and an aspect ratio of 70 (which are thick plant fibers), having a dry mass of 28.60%. The hardwood fibers are hydroxyl-containing hardwood fibers with an average width of 17 $\mu$m and an aspect ratio of 65 (which are fine plant fibers), having a dry mass of 8.0%.

The dry mass ratio of the original chemically synthesized fibers without hydrophilic modification to the plant fibers is 7.58:92.42.

Test Example 11

In this test example, each the sheet-like acoustic reinforcing composite materials provided in Examples 16-18 and Comparative Examples 18-19 as described above was cut into a size of 10 × 10 mm and then weighed. Subsequently, the resonance frequency shift value $\Delta f0$ of each of the sheet-like acoustic reinforcing composite materials was tested in accordance with Section 7.4 in the group standard "Porous Sound-Absorbing Particles for Microspeakers" (Standard Number: T/CECA 78-2022). The specific results are shown in Table 11 below.

Table 11. Acoustic performance data of the sheet-like acoustic reinforcing composite materials from Examples 16-18 and Comparative Examples 18-19

|  | Total weight of sheet material, 10 × 10 mm, mg | Dry mass of molecular sieve, % | Dry mass of molecular sieve, mg | Δf0, Hz |
|---|---|---|---|---|
| Example 16 | 50.0 | 80.0 | 40.0 | 51 |
| Example 17 | 50.0 | 60.0 | 30.0 | 38 |
| Example 18 | 50.0 | 35.5 | 17.75 | 27 |
| Comparative Example 18 | 50.0 | 80.0 | 40.0 | 49 |
| Comparative Example 19 | 50.0 | 60.0 | 30.0 | 36 |

After calculation, each of the sheet-like acoustic reinforcing composite materials obtained in Examples 16-18 and Comparative Examples 18-19 was cut into a size of 10 × 10 mm, and the dry mass of the molecular sieve in each sheet-like acoustic reinforcing composite material was as follows: 40.0 mg, 30.0 mg, 17.75 mg, 40.0 mg, 30.0 mg.

The acoustic efficiency of the sheet-like acoustic reinforcing composite material per unit mass was then calculated according to the equation below, and the obtained acoustic efficiency data are shown in Table 12 below.

Acoustic efficiency = Δf0 / (dry mass of molecular sieve); Unit: Hz/mg.

Table 12. Acoustic efficiency data of the sheet-like acoustic reinforcing composite materials from Examples 16-18 and Comparative Examples 18-19

|  | Acoustic efficiency, Hz/mg |
|---|---|
| Example 16 | 1.275 |
| Example 17 | 1.267 |
| Example 18 | 1.521 |
| Comparative Example 18 | 1.225 |
| Comparative Example 19 | 1.200 |

It can be seen from the experimental data in Tables 11 and 12 that all of the sheet-like acoustic reinforcing composite materials provided in Examples 16-18 according to the present disclosure exhibit excellent acoustic performances.

It can also be seen from the experimental data in Tables 11 and 12 that the acoustic performances of the sheet-like acoustic reinforcing composite materials obtained in Examples 16 and 17 are slightly superior to that of the sheet-like acoustic reinforcing composite materials provided in the corresponding Comparative Examples 18 and 19. This is because that the fibrous material used in Example 16 is composed of hydrophilically modified chemically synthesized fibers and softwood fibers. Despite undergoing hydrophilic modification, the chemically synthesized fibers retain their inherent stiffness and resistance to deformation. Therefore, the sheet-like acoustic reinforcing composite material obtained in Example 16 is more loosely structured and has a more abundant pore structure, resulting in better acoustic performances. Since Comparative Example 19 uses original chemically synthesized fibers without hydrophilic modification, which demonstrate inferior compatibility with plant fibers compared to hydrophilically modified synthetic fibers chemically synthesized fibers, the acoustic performance of the sheet-like acoustic reinforcing composite material obtained in Comparative Example 19 is inferior to that of the sheet-like acoustic reinforcing composite material provided in Example 17.

Test Example 12

In this test example, each the sheet-like acoustic reinforcing composite materials provided in Examples 16-18 and Comparative Examples 18-19 as described above was cut into a size of 10 × 10 mm. Subsequently, the high-temperature and high-humidity storage Δf'HTHR of each of the sheet-like acoustic reinforcing composite materials was tested in accordance with the technical contents specified in Section 7.8.4 in the group standard "Porous Sound-Absorbing Particles for Microspeakers" (Standard Number: T/CECA 78-2022). The specific results are shown in Table 13 below.

Table 13. High-temperature and high-humidity storage Δf'HTHR test data of the sheet-like acoustic reinforcing composite materials provided in Examples 16-18 and Comparative Examples 18-19

| | $\triangle$f'HTHR, Hz |
|---|---|
| Example 16 | 1 |
| Example 17 | 0 |
| Example 18 | -1 |
| Comparative Example 18 | 1 |
| Comparative Example 19 | -1 |

It can be seen from Table 13 above that the acoustic performances of the sheet-like acoustic reinforcing composite materials provided in Examples 16-18 according to the present disclosure and Comparative Examples 18-19 are not decreased after high-temperature and high-humidity treatment, indicating that all of these sheet-like acoustic reinforcing composite materials have stable properties. However, the acoustic performances (the acoustic performance in Table 11 and the acoustic efficiency in Table 12) of the sheet-like acoustic reinforcing composite materials provided in Comparative Examples 18-19 are not as good as that of the corresponding examples.

Test Example 13

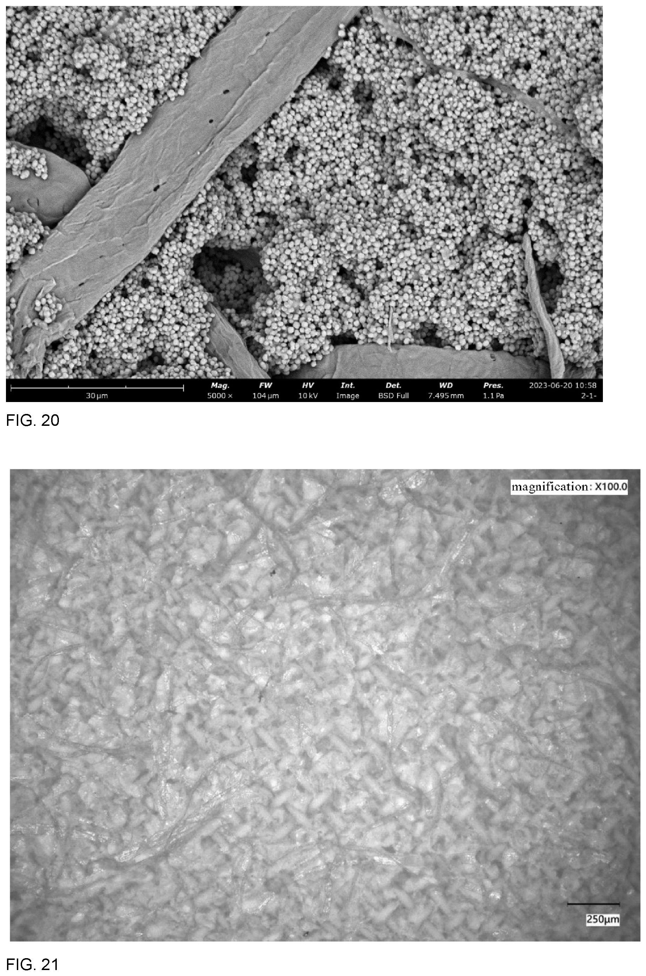

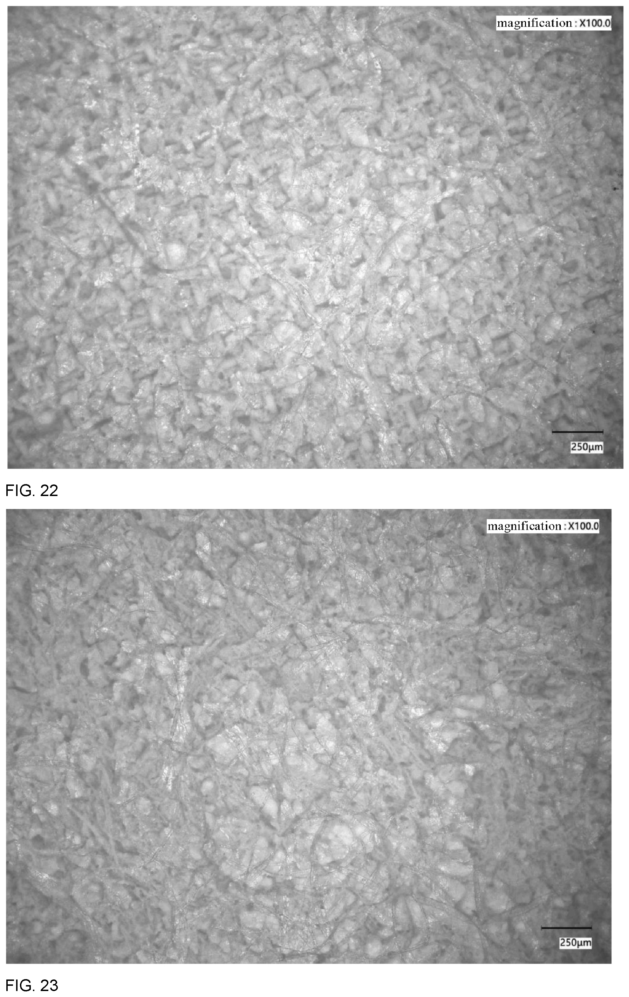

In this test example, the surface morphologies of the sheet-like acoustic reinforcing composite materials provided in Example 16-18 according to the present disclosure were obtained using a high-definition digital microscope. The obtained experimental results are shown in Figs. 21-23, respectively. It is obvious from Figs. 21-23 that there are three-dimensional network structures formed by interweaving fibrous materials in the sheet-like acoustic reinforcing composite materials provided in the examples according to the present disclosure, and the particles of the powdery porous material are precipitated on the surface of the fibrous materials and in the three-dimensional network structures due to the precipitation aid. Moreover, it can also be seen from Figs. 21-23 that an abundant porous structure exists on the surface of the sheet-like acoustic reinforcing composite materials provided in the Examples 16-18 of the present disclosure. Moreover, the higher the dry mass of the powdery porous material particles in the sheet-like acoustic reinforcing composite material, the more pronounced the powdery porous material particles are observed to be attached to the three-dimensional network structure through the action of the precipitation aid.

Test Example 14

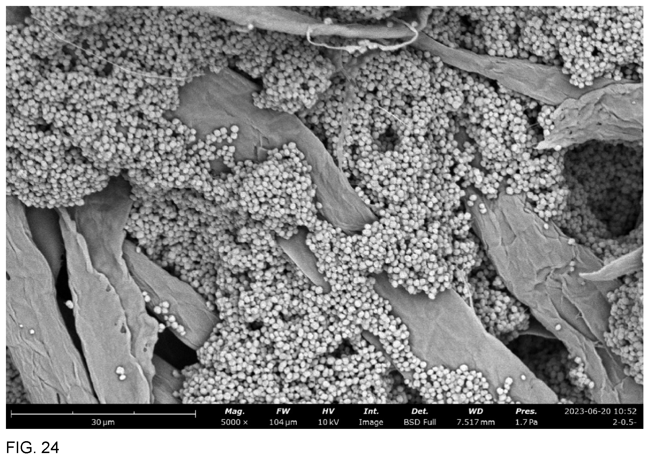

In this test example, SEM analysis was carried out on the sheet-like acoustic reinforcing composite material provided in Example 17 according to the present disclosure. The obtained SEM image is shown in Fig. 24. It can be seen from Fig. 24 that there are a large number of porous structures with high porosity in the sheet-like acoustic reinforcing composite materials provided in Example 17, and these porous structures are the three-dimensional network structures formed by interweaving fibrous materials. It can be reasonably presumed that there are also a large number of porous structures with high porosity in the sheet-like acoustic reinforcing composite materials prepared in other examples according to the present disclosure.

Comparative Test Example 1

In this comparative test example, 40.0 mg, 30.0 mg, 17.75 mg, 7.0 mg and 9.31 mg of commercially available conventional acoustic reinforcing particles (with an average particle size of 420 $\mu$m) were accurately weighed, respectively, and the acoustic performance Δf0 and high-temperature and high-humidity storage Δf'HTHR of the commercially available conventional acoustic reinforcing particles were then tested according to the same test methods as those in Test Examples 1 and 2. The results are shown in Table 14 below.

Table 14. Test results of the commercially available conventional acoustic reinforcing particles

| Mass, mg | Δf0/Hz | $\triangle$f'$_{HTHR}$ /Hz |
|---|---|---|
| 40.0 | 46 | -4 |
| 30.0 | 37 | -4 |
| 17.75 | 25 | -2 |

(continued)

| Mass, mg | $\Delta f0$/Hz | $\triangle f'_{HTHR}$/Hz |
|---|---|---|
| 7.0 | 13 | -2 |
| 9.31 | 15 | -2 |

After comparing the experimental data in Tables 1, 3, 4, 6, 8, 10, 11, 13 and 14, it can be seen that both the acoustic performance $\Delta f0$ and high-temperature and high-humidity storage $\Delta f'HTHR$ of the sheet-like acoustic reinforcing composite materials provided in Examples 1-18 of the present disclosure are significantly superior to those of the commercially available conventional acoustic reinforcing particles.

The above are only specific examples of the present disclosure and cannot be used to limit the implementable scope of the invention. Therefore, the substitution with equivalent components or equivalent changes and modifications made in accordance with the protection scope of the patent of the present disclosure shall still fall within the scope encompassed by the patent. In addition, arbitrary combinations of technical features and technical features, technical features and technical inventions, and technical inventions and technical inventions of the present disclosure can be used.

## Claims

1. An acoustic reinforcing composite material, wherein the acoustic reinforcing composite material is formed by interweaving a fibrous material and has a three-dimensional network structure inside, and wherein a powdery porous material is attached to the surface of the fibrous material by means of a precipitation aid.

2. The acoustic reinforcing composite material according to Claim 1, wherein based on 100% of the total weight of the acoustic reinforcing composite material, the dry mass of the fibrous material is 19.50-85.95%, the dry mass of the powdery porous material is 14.0-80.0%, preferably 50.0-70.0%, and the dry mass of the precipitation aid is 0.05-0.5%.

3. The acoustic reinforcing composite material according to Claim 1, wherein the diameter or width of the fibrous material is in the range of 3-70 $\mu$m, and the aspect ratio thereof is in the range of 8-500.

4. The acoustic reinforcing composite material according to Claim 3, wherein the diameter or width of the fibrous material is in the range of 8-70 $\mu$m.

5. The acoustic reinforcing composite material according to any one of Claims 1-4, wherein the fibrous material comprises organic fibers.

6. The acoustic reinforcing composite material according to Claim 5, wherein the organic fibers comprise hydrophilic natural fibers and/or chemically synthesized fibers.

7. The acoustic reinforcing composite material according to Claim 5 or 6, wherein the organic fibers comprise hydrophilic natural fibers and chemically synthesized fibers, and the dry mass ratio of the hydrophilic natural fibers to the chemically synthesized fibers is (100-80):(0-20), preferably (100-95):(0-5).

8. The acoustic reinforcing composite material according to Claim 7, wherein the chemically synthesized fibers comprise chemically synthesized fibers without hydrophilic modification, and/or hydrophilically modified chemically synthesized fibers obtained by subjecting chemically synthesized fibers without hydrophilic modification to hydrophilic modification; preferably wherein the chemically synthesized fibers comprise hydrophilically modified chemically synthesized fibers;

wherein the chemically synthesized fibers without hydrophilic modification comprises one or more of polypropylene fibers, polyamide fibers, polyethylene fibers, polyester fibers, polylactic acid fibers, polyetheretherketone fibers, polyphenylene sulfide fibers, and polyacrylonitrile fibers;
wherein the hydrophilically modified chemically synthesized fibers comprise one or more of hydrophilically modified polypropylene fibers, hydrophilically modified polyamide fibers, hydrophilically modified polyethylene fibers, hydrophilically modified polyester fibers, hydrophilically modified polylactic acid fibers, hydrophilically modified polyetheretherketone fibers, hydrophilically modified polyphenylene sulfide fibers, and hydrophilically modified polyacrylonitrile fibers.

9. The acoustic reinforcing composite material according to any one of Claims 6-8, wherein the cross-sectional shape of the chemically synthesized fibers comprises a circular shape, a flat shape, or a special shape, wherein the special shape comprises a cross-shaped structure, a core-sheath structure, a triangular structure, a clover structure, a "王"-shaped structure, a Y-shaped structure, or a hollow structure.

10. The acoustic reinforcing composite material according to any one of Claims 6-9, wherein the hydrophilic natural fibers comprise one or more of plant fibers, regenerated cellulose fibers, and bacterial fibers, wherein the dry mass ratio of the plant fibers, regenerated cellulose fibers, and bacterial fibers is (100-60):(0-30):(0-10), preferably (100-85):(0-10):(0-5).

11. The acoustic reinforcing composite material according to any one of Claims 6-8 and 10, wherein, when the fibrous material is composed of plant fibers and hydrophilically modified chemically synthesized fibers, the dry mass ratio between these two is (98-70):(2-30), preferably (95-80):(5-20).

12. The acoustic reinforcing composite material according to Claim 10 or **11,** wherein the plant fibers comprise fine plant fibers and/or thick plant fibers, wherein the diameter or width of the fine plant fibers is in the range of 8 $\mu$m or more and less than 30 $\mu$m, and the diameter or width of the thick plant fibers is in the range of 30-70 $\mu$m;
wherein the dry mass ratio of the thick plant fibers to the fine plant fibers is (100-0):(0-100), preferably (100-30):(0-70).

13. The acoustic reinforcing composite material according to Claim 10 or **11,** wherein the aspect ratio of the plant fibers is 8-150.

14. The acoustic reinforcing composite material according to any one of Claims 10-13, wherein the plant fibers are a fibrous material produced from natural plants as raw materials, and the natural plants comprise one or more of softwood, hardwood, bast fiber crops, bamboo, rice straw, bagasse, reed, and cotton.

15. The acoustic reinforcing composite material according to Claim 10, wherein the regenerated cellulose fibers comprise one or more of viscose fibers, Modal fibers, Lyocell fibers, acetate fibers, cuprammonium fibers, and Tencel fibers.

16. The acoustic reinforcing composite material according to Claim 10, wherein the bacterial fibers comprise cellulose fibers synthesized by microorganisms under certain conditions using nutrients required for bacterial growth and reproduction as raw materials, wherein the microorganisms comprise *Acetobacterium, Agrobacterium, Rhizobium* or *Sarcina.*

17. The acoustic reinforcing composite material according to any one of Claims 1-4, wherein the fibrous material comprises one or more of inorganic fibers, plant fibers, and composite chemical fibers.

18. The acoustic reinforcing composite material according to Claim 17, wherein the diameter or width of the inorganic fibers is in the range of 3-45 $\mu$m, and the aspect ratio thereof is 10-500.

19. The acoustic reinforcing composite material according to Claim 17 or 18, wherein the inorganic fibers comprise one or more of basalt fibers, glass fibers, quartz fibers, asbestos fibers, volcanic fibers, metal fibers, alumina fibers, and carbon fibers.

20. The acoustic reinforcing composite material according to Claim 17, wherein the diameter or width of the plant fibers is in the range of 8-70 $\mu$m, and the aspect ratio thereof is in the range of 8-150.

21. The acoustic reinforcing composite material according to Claim 17 or 20, wherein the moisture absorption rate of the plant fibers is 16.0-31.5%, preferably 20.0-31.5%.

22. The acoustic reinforcing composite material according to Claim 21, wherein the plant fibers are a fibrous material produced from natural plants as raw materials, wherein the natural plants comprise one or more of softwood, hardwood, bast fiber crops, bamboo, rice straw, bagasse, reed, and cotton.

23. The acoustic reinforcing composite material according to Claim 17, wherein the diameter or width of the composite chemical fibers is in the range of 10-70 $\mu$m, and the aspect ratio thereof is in the range of 10-200.

24. The acoustic reinforcing composite material according to Claim 17 or 23, wherein the composite chemical fibers comprise one or more of composite chemical fibers with a core-sheath structure, a parallel structure, or a sea-island structure.

25. The acoustic reinforcing composite material according to Claim 24, wherein the composite chemical fibers with a parallel structure comprise chemical fibers having a melting point not higher than 140°C and chemical fibers having a melting point not lower than 150°C.

26. The acoustic reinforcing composite material according to Claim 25, wherein the chemical fibers having a melting point not higher than 140°C comprise polyethylene fibers and/or modified polyester fibers, and the chemical fibers having a melting point not lower than 150°C comprise ordinary polyester fibers and/or polypropylene fibers.

27. The acoustic reinforcing composite material according to Claim 24, wherein the composite chemical fiber with a sea-island structure comprises a matrix and a dispersed phase, the material of the matrix comprises chemical fibers having a melting point not higher than 140°C, and the material of the dispersed phase comprises chemical fibers having a melting point not lower than 150°C.

28. The acoustic reinforcing composite material according to Claim 27, wherein the material of the matrix comprises polyethylene fibers and/or modified polyester fibers, and the material of the dispersed phase comprises ordinary polyester fibers and/or polypropylene fibers.

29. The acoustic reinforcing composite material according to Claim 24, wherein the composite chemical fiber with a core-sheath structure comprises a core layer and a sheath layer covering the core layer, the material of the sheath layer comprises chemical fibers having a melting point not higher than 140°C, and the material of the core layer comprises chemical fibers having a melting point not lower than 150°C.

30. The acoustic reinforcing composite material according to Claim 29, wherein the core layer comprises ordinary polyester fibers and/or polypropylene fibers, and the sheath layer comprises polyethylene fibers and/or modified polyester fibers.

31. The acoustic reinforcing composite material according to Claim 17, wherein the dry mass ratio of the plant fibers to the composite chemical fibers is (98-60):(2-40).

32. The acoustic reinforcing composite material according to Claim 1, wherein the powdery porous material comprises one or more of zeolite molecular sieve, activated silica, activated carbon, calcium carbonate with a porous surface, calcium silicate with a porous surface, alumina, hydrogels, and aerogels.

33. The acoustic reinforcing composite material according to Claim 32, wherein the zeolite molecular sieve has a particle size of 0.5-10 $\mu$m, and comprises micropores having a pore size of 0.3-0.7 nm and mesopores having a pore size of 10-30 nm.

34. The acoustic reinforcing composite material according to Claim 32 or 33, wherein the zeolite molecular sieve comprises one or more of MFI-structured molecular sieve, FER-structured molecular sieve, CHA-structured molecular sieve, MEL-structured molecular sieve, TON-structured molecular sieve, and MTT-structured molecular sieve.

35. The acoustic reinforcing composite material according to Claim 1, wherein the precipitation aid comprises one or more of polyacrylamide, starch, polyethyleneimine, polyimide, and guar gum.

36. The acoustic reinforcing composite material according to any one of Claims 1-4, wherein the GSM of the acoustic reinforcing composite material is in the range of 50-1200 $g/m^2$.

37. The acoustic reinforcing composite material according to any one of Claims 1-4, wherein the shape of the acoustic reinforcing composite material comprises a sheet shape, a block shape, or an irregular shape.

38. A method for producing the acoustic reinforcing composite material according to any one of Claims 1-37, comprising:

Step 1: dispersing the fibrous material, the powdery porous material, and the precipitation aid in water separately, to obtain a fibrous material dispersion, a powdery porous material dispersion, and a precipitation aid dispersion, respectively;

Step 2: adding the powdery porous material dispersion to the fibrous material dispersion and mixing uniformly, and then adding the precipitation aid dispersion and mixing uniformly, to interweave the fibrous material while simultaneously precipitating the powdery porous material onto the surface of the fibrous material;

Step 3: filtering the mixed liquid obtained in Step 2 to obtain a precursor material;

Step 4: drying the precursor material to obtain the acoustic reinforcing composite material.

39. The method according to Claim 38, wherein when the fibrous material comprises composite chemical fibers, the method further comprises:

Step 5: subjecting the acoustic reinforcing material to a high-temperature treatment at a temperature not lower than the melting point of the sheath layer contained in the composite chemical fibers, such that the sheath layer in the composite chemical fibers is melted while the core layer is not.

40. A loudspeaker comprising one or more acoustic sensors and one or more housings, wherein the one or more acoustic sensors and the one or more housings are combined to form a rear cavity of the loudspeaker, and wherein the acoustic reinforcing composite material according to any one of Claims 1-37 is provided in the rear cavity of the loudspeaker.

41. An electronic device comprising a loudspeaker, wherein the acoustic reinforcing composite material according to any one of Claims 1-37 is provided in the rear cavity of the loudspeaker.

42. The electronic device according to claim 41, wherein the electronic device comprises a smart phone, a TWS earphone, a headphone, smart glasses, a smart watch, a VR device, an AR device, a tablet computer, or a lightweight laptop.

FIG. 1

FIG. 2

magnification : X100.0

250μm

FIG. 3

magnification: X100.0

250μm

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

| | Mag. | FW | HV | Int. | Det. | WD | Pres. | 2023-06-20 10:52 |
|---|---|---|---|---|---|---|---|---|
| 30 μm | 5000 × | 104 μm | 10 kV | Image | BSD Full | 7.517 mm | 1.7 Pa | 2-0.5- |

FIG. 24

## INTERNATIONAL SEARCH REPORT

| | International application No. |
|---|---|
| | **PCT/CN2024/112081** |

| | |
|---|---|
| **A.** | **CLASSIFICATION OF SUBJECT MATTER** |

C08L97/02(2006.01)i; H04R9/06(2006.01)i; D06M101/04(2006.01)i; D06M101/32(2006.01)i; D06M101/20(2006.01)i

According to International Patent Classification (IPC) or to both national classification and IPC

| | |
|---|---|
| **B.** | **FIELDS SEARCHED** |

Minimum documentation searched (classification system followed by classification symbols)

IPC: C08L97/-; H04R9/-; D06M101/-

Documentation searched other than minimum documentation to the extent that such documents are included in the fields searched

Electronic data base consulted during the international search (name of data base and, where practicable, search terms used)

CNTXT, CNKI, DWPI, ENTXT, ENTXTC, ISI Web of Science: 长径比, 沉淀, 淀粉, 多孔, 多孔粉体, 二氧化硅, 发声, 沸石, 分子筛, 粉体, 瓜尔胶, 硅酸钙, 活性炭, 胶粘剂, 胶黏剂, 结合剂, 聚丙烯酰胺, 聚乙烯亚胺, 聚酰亚胺, 颗粒, 粒子, 气凝胶, 声学, 声学增强, 水凝胶, 碳酸钙, 吸声, 吸音, 纤维, 扬声, 氧化铝, 粘附剂, 粘结剂, 粘着剂, 黏合剂, 黏接剂, 黏结剂, 黏結剂, acoustics, adhesive, aerogel, alumina, binder, fibre, PAM, PEI, PI, polyacrylamide, polyethyleneimine, polyimide, porous, powder, precipitation, silica, starch, vocalization, molecular sieve, aspect ratio?, guar gum, calcium carbonate, calcium silicate, sound absorbing, binding agent?, sound absorption, particle?, raising sound, hydrogel?, boiling stone, activated carbon

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| PX | CN 117229648 A (ZHENJIANG BEST NEW MATERIAL CO., LTD.) 15 December 2023 (2023-12-15)<br>    entire document | 1-10, 12-16, 32-38, 40-42 |
| PX | CN 117241206 A (ZHENJIANG BEST NEW MATERIAL CO., LTD.) 15 December 2023 (2023-12-15)<br>    entire document | 1-6, 8-9, 11-14, 32-38, 40-42 |
| PX | CN 117156374 A (ZHENJIANG BEST NEW MATERIAL CO., LTD.) 01 December 2023 (2023-12-01)<br>    entire document | 1-7, 9-10, 12-16, 32-38, 40-42 |
| PX | CN 117219040 A (ZHENJIANG BEST NEW MATERIAL CO., LTD.) 12 December 2023 (2023-12-12)<br>    entire document | 1-4, 32-38, 40-42 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 October 2024** | **04 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/112081** |

### C.    DOCUMENTS CONSIDERED TO BE RELEVANT

| Category* | Citation of document, with indication, where appropriate, of the relevant passages | Relevant to claim No. |
| --- | --- | --- |
| PX | CN 117230636 A (ZHENJIANG BEST NEW MATERIAL CO., LTD.) 15 December 2023 (2023-12-15)<br>    entire document | 1-3, 17-42 |
| X | EP 3594423 A1 (LUMIR OY) 15 January 2020 (2020-01-15)<br>    description, paragraphs [0026]-[0030], [0033]-[0035], and [0043]-[0044] | 1-2, 5, 17, 32-38, 40-42 |
| X | CN 114801343 A (ZHENJIANG BEST NEW MATERIAL CO., LTD.) 29 July 2022 (2022-07-29)<br>    description, embodiments 1-2, and figures 3-4 | 1, 17, 19, 40 |
| A | CN 116354645 A (ZHENJIANG BEST NEW MATERIAL CO., LTD.) 30 June 2023 (2023-06-30)<br>    entire document | 1-42 |
| A | JP 2019049082 A (HOSIDEN CORP.) 28 March 2019 (2019-03-28)<br>    entire document | 1-42 |
| A | US 2003077438 A1 (CABOT CORP.) 24 April 2003 (2003-04-24)<br>    entire document | 1-42 |

Form PCT/ISA/210 (second sheet) (July 2022)

## INTERNATIONAL SEARCH REPORT
### Information on patent family members

International application No.

**PCT/CN2024/112081**

| Patent document cited in search report | | | Publication date (day/month/year) | Patent family member(s) | | | Publication date (day/month/year) |
|---|---|---|---|---|---|---|---|
| CN | 117229648 | A | 15 December 2023 | None | | | |
| CN | 117241206 | A | 15 December 2023 | None | | | |
| CN | 117156374 | A | 01 December 2023 | None | | | |
| CN | 117219040 | A | 12 December 2023 | None | | | |
| CN | 117230636 | A | 15 December 2023 | None | | | |
| EP | 3594423 | A1 | 15 January 2020 | EP | 3594423 | B1 | 16 October 2024 |
| CN | 114801343 | A | 29 July 2022 | CN | 215040822 | U | 07 December 2021 |
| | | | | WO | 2022161467 | A1 | 04 August 2022 |
| | | | | KR | 20230137966 | A | 05 October 2023 |
| | | | | US | 2023368765 | A1 | 16 November 2023 |
| | | | | EP | 4282641 | A1 | 29 November 2023 |
| | | | | JP | 2024504815 | A | 01 February 2024 |
| | | | | VN | 101018 | A | 26 February 2024 |
| CN | 116354645 | A | 30 June 2023 | None | | | |
| JP | 2019049082 | A | 28 March 2019 | JP | 6960812 | B2 | 05 November 2021 |
| US | 2003077438 | A1 | 24 April 2003 | US | 6887563 | B2 | 03 May 2005 |
| | | | | WO | 9710188 | A1 | 20 March 1997 |
| | | | | DE | 19533564 | A1 | 13 March 1997 |
| | | | | EP | 0850207 | A1 | 01 July 1998 |
| | | | | NO | 980991 | A | 06 March 1998 |
| | | | | MX | 9801908 | A | 01 October 1998 |
| | | | | CN | 1196036 | A | 14 October 1998 |
| | | | | KR | 19990044531 | A | 25 June 1999 |
| | | | | JP | 4118331 | B2 | 16 July 2008 |
| | | | | CN | 1104393 | C | 02 April 2003 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311194810
- CN 202311194809
- CN 202311194808
- CN 202311194806
- CN 202311194805X